# EUROPEAN PATENT SPECIFICATION

(11) **EP 2 551 947 B1**
(45) Date of publication and mention of the grant of the patent: **20.08.2014**
(21) Application number: 12177946.6
(22) Date of filing: 26.07.2012
(51) Int. Cl.: H01M 8/04, H01M 8/06, H01M 8/12

(54) **Fuel cell system**
Brennstoffzellensystem
Système de pile à combustible

(30) Priority: 27.07.2011 JP 2011164151
(43) Date of publication of application: 30.01.2013
(73) Proprietor: AISIN SEIKI KABUSHIKI KAISHA, Kariya-shi, Aichi 448-8650 (JP)
(72) Inventor: Ohkawara, Hiroki, Kariya-shi, Aichi 448-8650 (JP)
(74) Representative: TBK

(56) References cited:
- JP-A- 2006 140 031
- JP-A- 2010 033 934
- US-A1- 2005 106 431
- US-A1- 2009 064 764
- US-A1- 2010 092 814

## Description

### TECHNICAL FIELD

This disclosure generally relates to a fuel cell system.

### BACKGROUND DISCUSSION

A known fuel cell system is disclosed in JP2010-033934A (which will be hereinafter referred to as Reference 1). According to the fuel cell system disclosed in Reference 1, on a regular basis during an operation of the fuel cell system, a lifetime calculating means detects a combustion air flow volume when a combustion fan is controlled by a combustion fan control means so as to rotate at predetermined revolutions. Specifically, the combustion air flow volume is detected by a flow volume detection means and transmitted to the lifetime calculating means via the combustion fan control means. The lifetime calculating means stores the combustion air flow volume at a first storage means in chronological order as a first time series data. In addition, the lifetime calculating means detects revolutions of the combustion fan when the combustion fan is operated at a predetermined operation amount. Specifically, the revolutions of the combustion fan are detected by a revolution detecting means and transmitted to the lifetime calculating means. The lifetime calculating means stores the revolutions of the combustion fan at a second storing means in chronological order as a second time series data. The lifetime calculating means separately predicts a lifetime of an air filter or a lifetime of the combustion fan based on the first time series data or the second time series data.

The aforementioned "on a regular basis during the operation of the fuel cell system" corresponds to once a week or a month, for example, at which a self-diagnosis of the fuel cell system is performed while the self-diagnosis includes a diagnosis of the air filter. In addition, the state where the combustion fan rotates at the predetermined revolutions corresponds to a state where the combustion fan rotates at the predetermined revolutions by a revolution feedback control.

Another fuel cell system is disclosed in JP2006-140031A (which will be hereinafter referred to as Reference 2). According to the fuel cell system disclosed in Reference 2, revolutions of a cooling fan are specified. Then, a fan revolution detecting means detects whether or not the revolutions of the cooling fan are normally changed. In a case where it is not detected that the revolutions of the cooling fan are normally changed, a malfunction of the cooling fan is determined by a fan malfunction detecting means. In addition, a lifetime determination means compares an elapsed operation time of a reforming means cooling fan measured by a calculation means and a lifetime threshold value of the reforming means cooling fan as a target for a replacement thereof stored at a storage means. In a case where the elapsed operation time of the reforming means cooling fan exceeds the lifetime threshold value, it is determined that the lifetime of the reforming means cooling fan has expired.

According to the fuel cell system disclosed in Reference 1, timing at which the fuel cell system performs the self-diagnosis is required to be provided. At this time, it is impossible to perform the self-diagnosis during a normal power generation operation (or a start-up operation). The self-diagnosis may be performed while the operation of the fuel cell system is being stopped, however, may be impossible in a case where the fuel cell system is operated for 24 hours 365 days. In addition, in a case where a disturbance including a change of a combusting portion because of a pressure loss and a blocking of an exhaust port occurs, for example, revolutions and a flow volume of a pump varies, which may lead to a wrong determination.

According to the fuel cell system disclosed in Reference 2, the wrong determination may occur due to the disturbance in the same way as Reference 1 in addition to a user load (specifically, a low user load).

A need thus exists for a fuel cell system in which an error determination is accurately performed during a normal power generation operation regardless of a disturbance or a user load.

Furthermore, according to US 2010/0092814 A1 there is known a fuel cell control system which is configured to detect failure conditions during operation of a solid oxide fuel cell and enables corrections of operational errors while the fuel cell system continues to operate.

### SUMMARY

According to an aspect of this disclosure, a fuel cell system includes the features defined in claim 1.

According to this aspect, by the comparison between the flow rate to indication value derived characteristics generated on a basis of the data of the control indication value and the flow rate of the fluid or the revolutions of the electric motor within the predetermined time during the actual power generation operation or the start-up operation, and the flow rate to indication value reference characteristics stored beforehand may achieve the error determination of the source material supply system, the water supply system, or the cathode gas supply system. As a result, it may not be required to provide an exclusive time for determining the error state during a stop operation of the fuel cell system. The determination of the error state may be accurately performed during the normal power generation operation or the start-up operation. In addition, because the determination of the error state may be performed with a usage of actual data including an influence of a disturbance or data in the actual usage of a user, the determination of the error state is accurately performed without an influence of the disturbance or a fluctuation of a user load.

According to this aspect, the error determination of each of the source material supply system, the water supply system, and the cathode gas supply system may be easily and specifically performed. In addition, the state of the fuel cell system may be further accurately obtained.

The supply system error determination portion may include a second determination portion determining that each of the source material supply system, the water supply system, and the cathode gas supply system including the source material supply device, the water supply device, and the oxidant gas supply device respectively is in the normal state in a case where a change quantity of the correlated control indication value for each of the source material supply device, the water supply device and the oxidant gas supply device calculated by the correlated control indication value calculation portion falls within a second predetermined range and determining that each of the source material supply system, the water supply system, and the cathode gas supply system including the source material supply device, the water supply device, and the oxidant gas supply device respectively is in the error state in a case where the change quantity of the correlated control indication value for each of the source material supply device, the water supply device and the oxidant gas supply device calculated by the correlated control indication value calculation portion is out of the second predetermined range in a state where the first determination portion determines that each of the source material supply system, the water supply system, and the cathode gas supply system is in the normal state.

Accordingly, at the time when the normal state is determined, a possible error in the near future is predictable so as to be alerted beforehand, thereby early responding to the possible error.

In a case where the supply system error determination portion determines that any one of the source material supply system, the water supply system, and the cathode gas supply system is in the error state because an upper limit of one of the first and second predetermined ranges is exceeded, the state determination portion may determine that one of the source material supply system, the water supply system, and the cathode gas supply system determined to be in the error state is blocked or likely to be blocked, and in a case where the supply system error determination portion determines that any one of the source material supply system, the water supply system, and the cathode gas supply system is in the error state because a lower limit of one of the first and second predetermined ranges is not reached, the state determination portion determines that one of the source material supply system, the water supply system, and the cathode gas supply system determined to be in the error state leaks or likely to leak.

Accordingly, the state of the fuel cell system may be further accurately obtained.

The fuel cell system may further include a reforming system at least including the reforming portion. The state determination portion determines that the reforming system is blocked or likely to be blocked in a case where the supply system error determination portion determines that the source material supply system and the water supply system are in the error state because an upper limit of one of the first and second predetermined ranges is exceeded and determines that the reforming system leaks or likely to leak in a case where the supply system error determination portion determines that the source material supply system and the water supply system are in the error state because a lower limit of one of the first and second predetermined ranges is not reached.

Accordingly, the state of the fuel cell system may be further accurately obtained.

The fuel cell system may further include a combusting portion burning an anode-off gas of the fuel cell to generate a combustion gas and heating the reforming portion by the combustion gas, and an exhaust system discharging the combustion gas. The state determination portion determines that the exhaust system is blocked or likely to be blocked in a case where the supply system error determination portion determines that all of the source material supply system, the water supply system, and the cathode gas supply system are in the error state because an upper limit of one of the first and second predetermined ranges is exceeded, and determines that the exhaust system leaks or likely to leak in a case where the supply system error determination portion determines that all of the source material supply system, the water supply system, and the cathode gas supply system are in the error state because a lower limit of one of the first and second predetermined ranges is not reached.

Accordingly, the state of the fuel cell system may be further accurately obtained.

The fuel cell system may further include an operation continuation portion continuing a power generation operation or a start-up operation of the fuel cell system while making an alert by the alert portion in a case where the supply system error determination portion determines that any one of the source material supply system, the water supply system, and the cathode gas supply system is in the error state because an upper limit of one of the first and second predetermined ranges is exceeded, and an operation stop portion performing a stop operation of the fuel cell system while making an alert by the alert portion in a case where the supply system error determination portion determines that any one of the source material supply system, the water supply system, and the cathode gas supply system is in the error state because a lower limit of one of the first and second predetermined ranges is not reached.

Accordingly, an appropriate operation of the fuel cell system is achieved on a basis of the state of the fuel cell system after the error determination is made.

The fuel cell system may further include a water storage system at least including a storage water supply device configured to be driven by an electric motor and circulating a storage water that recovers an exhaust heat of the fuel cell.

Accordingly, for the water storage system as well, it may not be required to provide an exclusive time for determining the error state during the stop operation of the fuel cell system. The determination of the error state may be accurately performed during the normal power generation operation or the start-up operation. In addition, because the determination of the error state may be performed with a usage of actual data including an influence of a disturbance or data in the actual usage of a user, the determination of the error state is accurately performed without an influence of the disturbance or a fluctuation of a user load.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view illustrating a fuel cell system according to an embodiment disclosed here;
Fig. 2 is a block diagram of the fuel cell system illustrated in Fig. 1;
Fig. 3 is a flowchart of a control program performed by a control device of the fuel cell system illustrated in Fig. 2;
Fig. 4 is a flowchart of a control program performed by the control device of the fuel cell system illustrated in Fig. 2 (an error determination of each supply system);
Fig. 5 is a block diagram for explaining a feed back control of a supply device;
Fig. 6 is a correlation diagram between a flow rate and a control indication value for a source material;
Fig. 7 is a time chart illustrating an example of time variation of a correlated control indication value; and
Fig. 8 is a table illustrating a state determination and a control method of the fuel cell system in a state where an error state and a normal state of supply systems are combined.

### DETAILED DESCRIPTION

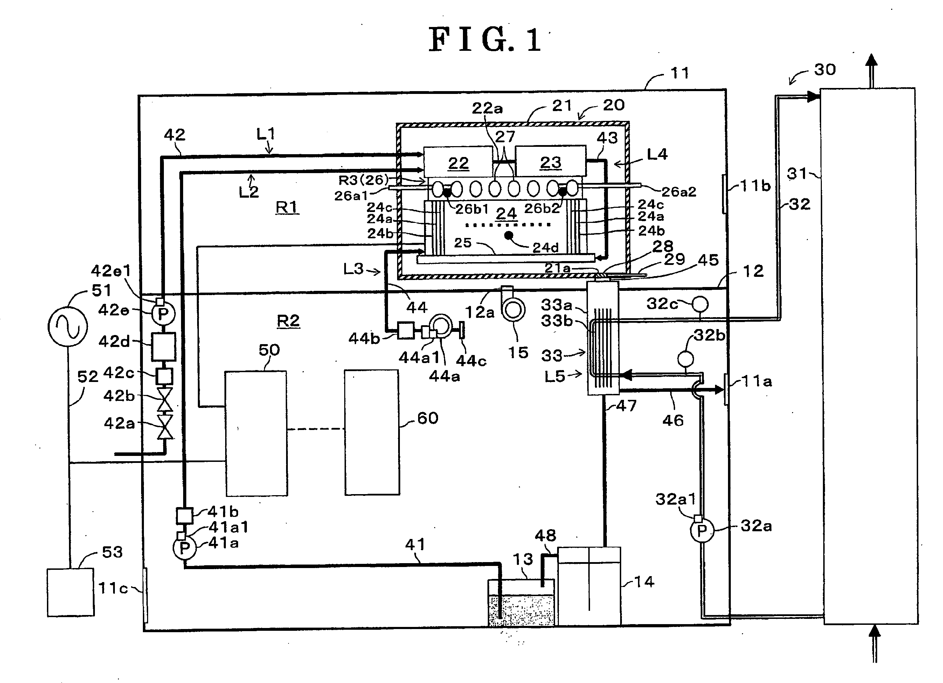

An embodiment will be explained with reference to the attached drawings. As illustrated in Fig. 1, a fuel cell system of the embodiment includes a case 11 substantially having a box shape, a fuel cell module 20, an exhaust heat recovery system 30, an inverter device 50, and a control device 60.

The case 11 includes a partition member 12 dividing an inside of the case 11 into a first chamber R1 serving as a first void and a second chamber R2 serving as a second void. The partition member 12 is a plate-shaped member dividing or separating the inside of the case 11 in a vertical direction (in an up-and-down direction). In the case 11, the first chamber R1 is arranged at an upper side relative to the partition member 12 and the second chamber R2 is arranged at a lower side relative to the partition member 12.

The fuel cell module 20 is accommodated within the first chamber R1 while having a distance (or a void) from an inner wall surface of the first chamber R1. The fuel cell module 20 at least includes a casing 21 and a fuel cell 24. According to the present embodiment, the fuel cell module 20 includes the casing 21, an evaporating portion 22, a reforming portion 23, the fuel cell 24, and a combusting portion 26.

The casing 21 made of an insulative material is substantially formed into a box shape. The casing 21 is supported via a support structure within the first chamber R1 while having the distance from the inner wall surface of the first chamber R1. The evaporating portion 22, the reforming portion 23, and the fuel cell 24 are arranged within the casing 21 in a state where the evaporating portion 22 and the reforming portion 23 are positioned at an upper side of the fuel cell 24.

The evaporating portion 22, which is heated by a combustion gas, evaporates water supplied to the evaporating portion 22 so as to generate water vapor and preheats a source material (fuel) supplied to the evaporating portion 22. The evaporating portion 22 mixes the water vapor generated in the aforementioned manner and the source material that is preheated so as to supply the mixture to the reforming portion 23. The source material corresponds to a gaseous fuel such as a natural gas and LPG, for example, and a liquid fuel such as kerosene, gasoline, and methanol, for example. According to the present embodiment, the natural gas is used as the source material.

A first end of a water supply pipe 41 is connected to the evaporating portion 22. A second end (a lower end) of the water supply pipe 41 is connected to a water tank 13 so that the second end is positioned within the water tank 13. A water pump 41a and a flow sensor 41b are provided in the mentioned order at the water supply pipe 41 from a side where the water tank 13 is provided. The water pump 41a serving as a water supply device supplies water to the evaporating portion 22 and controls or adjusts a volume of water supplied to the evaporating portion 22. A rotation sensor 41a1 is provided at the water pump 41a so as to detect revolutions (per time unit) of the water pump 41a or an electric motor incorporated in the water pump 41a and to output the detected revolutions to the control device 60. The flow sensor 41b detects a flow rate of water (per time unit) flowing through the water supply pipe 41 so as to be supplied to the evaporating portion 22 and transmits a detection result (i.e., an output signal) to the control device 60,

The source material is supplied to the evaporating portion 22 via a fuel supply pipe 42 from a fuel supply source. A pair of fuel valves 42a, 42b, a flow sensor 42c, a desulfurizer 42d, and a fuel pump 42e are provided in the mentioned order at the fuel supply pipe 42 from an upstream side in view of a flow direction of the source material.

The fuel valves 42a and 42b are electromagnetic on-off valves for connecting and disconnecting the fuel supply pipe 42. Each of the fuel valves 42a and 42b incorporates a filter for removing dust and dirt, for example, in the source material. The flow sensor 42c detects a flow rate of the source material (per time unit) supplied to the fuel cell 24 and transmits a detection result to the control device 60. The desulfurizer 42d removes sulfur content, for example, sulfur compound in the source material.

The fuel pump 42e is a source material supply device supplying the source material to the fuel cell 24 and controls a supply volume of the source material from the fuel supply source depending on a control command from the control device 60. A rotation sensor 42e1 is provided at the fuel pump 42e so as to detect revolutions (per time unit) of the fuel pump 42e or an electric motor incorporated in the fuel pump 42e and to output the detected revolutions to the control device 60.

The reforming portion 23 is heated by the combustion gas so as to receive heat necessary for a water vapor reforming reaction. As a result, the reforming portion 23 generates a reformed gas from a mixed gas (the source material and the water vapor) supplied from the evaporating portion 22 via a connection pipe 22a. Specifically, the inside of the reforming portion 23 is filled with a catalyst, for example, ruthenium catalyst (Ru catalyst) or nickel catalyst (Ni catalyst). The mixed gas supplied from the evaporating portion 22 reacts by means of the catalyst so as to be reformed, thereby generating hydrogen gas and carbon monoxide gas (the water vapor reforming reaction). At the same time, carbon monoxide generated during the water vapor reforming reaction and the water vapor react so as to be converted to hydrogen gas and carbon dioxide, i.e., a carbon monoxide shift reaction occurs. The thus generated gas (the reformed gas) is supplied to a fuel electrode of the fuel cell 24. The reformed gas includes hydrogen, carbon monoxide, carbon dioxide, water vapor, and natural gas (methane gas) that is not reformed. The water vapor reforming reaction is an endothermic reaction while the carbon monoxide shift reaction is an exothermic reaction.

The fuel cell 24 includes a lamination of plural cells 24a each having a fuel electrode, an air electrode (an oxidant electrode), and an electrolyte disposed between the fuel electrode and the air electrode. The fuel cell 24 according to the present embodiment is a solid oxide fuel cell (SOFC) where zirconium oxide serving as a solid oxide is used as the electrolyte. The fuel electrode of the fuel cell 24 is supplied with hydrogen, carbon monoxide, and methane gas, for example, as fuel. An operating temperature of the fuel cell 24 is substantially in a range from 400 degrees C to 1,000 degrees C. Not only hydrogen is used as the fuel but also natural gas or coal gas may be directly used as the fuel. When the natural gas or the coal gas is directly used as the fuel, the reforming portion 23 may be omitted.

A fuel flow passage 24b through which the reformed gas serving as the fuel flows is formed at the fuel electrode of each of the cells 24a. An air flow passage 24c through which air (cathode air) serving as oxidant gas flows is formed at the air electrode of each of the cells 24a.

The fuel cell 24 includes a temperature sensor 24d detecting a temperature of the fuel cell 24. The temperature sensor 24d is substantially positioned at a center in the lamination direction of the cells 24a of the fuel cell 24 and at a center in a vertical direction in Fig. 1. The temperature sensor 24d transmits a detection result to the control device 60.

The fuel cell 24 is placed on a manifold 25. The reformed gas is supplied from the reforming portion 23 to the manifold 25 via a reformed gas supply pipe 43. A lower end (a first end) of the fuel flow passage 24b is connected to a fuel lead-out port formed at the manifold 25. The reformed gas led out from the fuel lead-out port of the manifold 25 is introduced from the lower end of the fuel flow passage 24b and is discharged from an upper end of the fuel flow passage 24b. The cathode air sent from a cathode air blower 44a serving as a cathode air supply device and an oxidant gas supply device flows through a cathode air supply pipe 44 so as to be supplied from a lower end of the air flow passage 24c and be discharged from an upper end of the air flow passage 24c.

A flow sensor 44b is provided at the cathode air supply pipe 44. The flow sensor 44b detects a flow rate of cathode air (per time unit) supplied to the fuel cell 24 and transmits a detection result to the control device 60.

The cathode air blower 44a is arranged within the second chamber R2. The cathode air blower 44a suctions air within the second chamber R2 and discharges the air to the air electrode of the fuel cell 24. A discharge volume of air by the cathode air blower 44a is controlled on a basis of a conditioned control (for example, a load electric power (power consumption) of the fuel cell 24). In addition, a filter 44c is provided at an intake port of the cathode air blower 44a so as to remove dust and dirt, for example. Further, a rotation sensor 44a1 is provided at the cathode air blower 44a so as to detect revolutions (per time unit) of the cathode air blower 44a or an electric motor incorporated in the cathode air blower 44a and to output the detected revolutions to the control device 60.

In the fuel cell 24, the fuel supplied to the fuel electrode and the oxidant gas supplied to the air electrode achieve a power generation. Reactions indicated by a chemical formula (1) and a chemical formula (2) as below occur at the fuel electrode while a reaction indicated by a chemical formula (3) as below occurs at the air electrode. That is, oxide ion (O²⁻) generated at the air electrode penetrates through the electrolyte so as to react with hydrogen at the fuel electrode, thereby generating an electric energy. As a result, the reformed gas and the oxidant gas (air) that have not been used in the power generation are discharged from the fuel flow passage 24b and the air flow passage 24c respectively.

(1) H₂ + O²⁻ → H₂O + 2e⁻

(2) CO + O²⁻ →CO₂ + 2e⁻

(3) 1/2O₂ + 2e⁻ →O²⁻

The reformed gas (anode-off gas) that has not been used in the power generation is discharged from the fuel flow passage 24b and is burnt at a combustion void R3 formed between the fuel cell 24 and the evaporating portion 22 (the reforming portion 23) by means of the oxidant gas (air) that has not been used in the power generation. The resulting combustion gas heats the evaporating portion 22 and the reforming portion 23, and further brings the inside of the fuel cell module 20 to be maintained at an operating temperature. Afterwards, the combustion gas is discharged to the outside of the fuel cell module 20 from an exhaust opening 21a.

Accordingly, the aforementioned combustion void R3 constitutes the combusting portion 26 heating the reforming portion 23 by at least combusting or burning the anode-off gas of the fuel cell 24. The anode-off gas is burnt to generate flames 27 at the combusting portion 26 (the combustion void R3). First and second ignition heaters 26a1 and 26a2 are provided at the combusting portion 26 so as to ignite the anode-off gas. In addition, temperature sensors 26b1 and 26b2 are provided at the combusting portion 26 so as to detect the temperature of the combusting portion 26. A detection result (an output signal) of each of the temperature sensors 26b1 and 26b2 is transmitted to the control device 60.

A combustion catalyst 28 and a heater 29 are provided at the exhaust opening 21a. The combustion catalyst 28 is provided to burn combustible gas in air discharged from the fuel cell module 20 by means of a catalyst. The combustible gas corresponds to hydrogen, methane gas, and carbon monoxide, for example. The catalyst corresponds to Pt catalyst and Pd catalyst, for example. The heater 29 heats the combustion catalyst 28 so as to activate the catalyst (in an early stage of the start-up of the fuel cell system, for example).

The exhaust heat recovery system 30 serving as a water storage system performs a heat exchange between an exhaust heat of the fuel cell 24 and a storage water so that the exhaust heat is recovered and stored in the storage water. The exhaust heat recovery system 30 includes a hot water storage tank 31 storing water (storage water, hot water), a water circulation line 32 where the water is circulated, and a heat exchanger 33 where the heat exchange is performed between an exhaust combustion gas from the fuel cell module 20 and the water.

The hot water storage tank 31 includes a single column-shaped container in which the water is stored in such a manner that a temperature at an upper portion of the water in the container is the highest, is gradually decreasing towards a lower portion of the water, and is the lowest at the lower portion of the water in the container. Water, i.e., tap water (at relatively a low temperature), for example, is supplied to a lower portion of the column-shaped container of the hot water storage tank 31. The water (hot water) at a relatively high temperature stored in the hot water storage tank 31 is discharged from an upper portion of the container of the hot water storage tank 31.

A first end of the water circulation line 32 is connected to the lower portion of the hot water storage tank 31 while a second end of the water circulation line 32 is connected to the upper portion of the hot water storage tank 31. A water circulation pump 32a serving as a storage water supply device, a first temperature sensor 32b, the heat exchanger 33, and a second temperature sensor 32c are provided in the mentioned order at the water circulation line 32 from the first end towards the second end thereof. The water circulation pump 32a suctions the water (the storage water) at the lower portion of the hot water storage tank 31 so that the water flows in an arrow direction in Fig. 1 through the water circulation line 32 to be discharged and supplied to the upper portion of the hot water storage tank 31. A flow rate (a sending amount) of the water flowing through the water circulation line 32 is controlled by the water circulation pump 32a. A rotation sensor 32a1 is provided at the water circulation pump 32a so as to detect revolutions (per time unit) of the water circulation pump 32a or an electric motor incorporated in the water circulation pump 32a and to output the detected revolutions to the control device 60. The sending amount of the water by the water circulation pump 32a is controlled so that a detection temperature by the second temperature sensor 32c (i.e., a temperature of the water at an entry side of the hot water storage tank 31) turns to be a predetermined temperature or falls within a predetermined temperature range.

The first temperature sensor 32b is provided at a portion of the water circulation line 32 where the storage water flows towards the heat exchanger 33, i.e., provided between the heat exchanger 33 and the hot water storage tank 31. The first temperature sensor 32b detects the temperature of the water at an entry side of the heat exchanger 33, i.e., the temperature of the water at an exit side of the hot water storage tank 31. The first temperature sensor 32b transmits a detection result to the control device 60.

The second temperature sensor 32c is provided at a portion of the water circulation line 32 where the storage water flows from the heat exchanger 33. The second temperature sensor 32c detects the temperature of the water at an exit side of the heat exchanger 33, i.e., the temperature of the water at the entry side of the hot water storage tank 31. The second temperature sensor 32c transmits a detection result to the control device 60.

The heat exchanger 33 is supplied with the exhaust combustion gas from the fuel cell module 20 and the storage water from the hot water storage tank 31 so as to perform the heat exchange between the exhaust combustion gas and the storage water. The heat exchanger 33 is arranged within the case 11. According to the present embodiment, the heat exchanger 33 is provided at a lower side of the fuel cell module 20. At least a lower portion of the heat exchanger 33 penetrates through the partition member 12 and projects to the second chamber R2.

The heat exchanger 33 includes a casing 33a. A first connection pipe 45 is connected to an upper portion of the casing 33a. The first connection pipe 45 is connected to the exhaust opening 21a provided at a lower portion of the casing 21 of the fuel cell module 20 so that the exhaust combustion gas is discharged from the exhaust opening 21a. A second connection pipe 46 is connected to a lower portion of the casing 33a. The second connection pipe 46 is connected to an exhaust port 11a. A condensed water supply pipe 47 connected to a deionizer 14 is connected to a bottom portion of the casing 33a. A heat exchanging portion 33b serving as a condensation portion connected to the water circulation line 32 is provided within the casing 33a.

According to the heat exchanger 33 having the aforementioned configuration, the exhaust combustion gas from the fuel cell module 20 processed at the combustion catalyst 28 flows into the casing 33a through the first connection pipe 45. In a case where the exhaust combustion gas flows through the heat exchanging portion 33b where the storage water flows, the heat exchange is performed between the exhaust combustion gas and the storage water, thereby causing the exhaust combustion gas to be condensed and cooled. The exhaust combustion gas after condensation flows through the second connection pipe 46 to be discharged to the outside of the case 11 via the exhaust port 11a. Condensed water resulting from the aforementioned heat exchange flows through the condensed water supply pipe 47 so as to be supplied to the deionizer 14 (i.e., the condensed water drops by its own weight). On the other hand, the storage water flowing to the heat exchanging portion 33b is heated so as to flow out towards the upper portion of the hot water storage tank 31.

The fuel cell system of the present embodiment also includes the water tank 13 and the deionizer 14. The water tank 13 and the deionizer 14 are arranged within the second chamber R2. The water tank 13 stores pure water supplied from the deionizer 14. A water volume sensor (a water level sensor) is provided within the water tank 13 so as to detect a pure water volume in the water tank 13. The water volume sensor is a float-type or a capacitive-type water level indicator, for example. The water volume sensor transmits a detection signal to the control device 60.

The deionizer 14 incorporates activated carbon and ion-exchange resin. For example, the deionizer 14 is filled with the flaky activated carbon and the granular ion-exchange resin. In addition, depending on a state of treatment-object water, a hollow fiber filter may be provided at the deionizer 14. The deionizer 14 brings the condensed water from the heat exchanger 33 to be pure water by means of the activated carbon and the ion-exchange resin. The deionizer 14 is connected to the water tank 13 via a pipe 48. The pure water in the deionizer 14 is supplied to the water tank 13 by flowing through the pipe 48.

The fuel cell system includes an air inlet port 11c formed at the case 11 forming the second chamber R2, an air outlet port 11 b formed at the case 11 forming the first chamber R1, and a ventilation air blower 15 provided at an air inlet port 12a formed at the partition member 12. In a case where the ventilation air blower 15 is operated, an outside air is suctioned to the second chamber R2 via the air inlet port 11c and is sent to the first chamber R1 by the ventilation air blower 15. The air in the first chamber R1 is discharged to the outside of the case 11 via the air outlet port 11b.

The fuel cell system also includes the inverter device 50. The inverter device 50 includes a first function for receiving a DC (direct-current) voltage output from the fuel cell 24 and converting the DC voltage into a predetermined AC (alternating-current) voltage so as to output the AC voltage to a power line 52 connected to an alternating system power supply 51 (hereinafter simply referred to as a system power supply 51) and an external electric power load 53 (hereinafter simply referred to as an electric power load 53). The inverter device 50 also includes a second function for receiving an AC voltage from the system power supply 51 via the power line 52 and converting the AC voltage into a predetermined DC voltage so as to output the DC voltage to an auxiliary machinery and/or the control device 60.

The system power supply 51 supplies an electric power to the electric power load 53 via the power line 52 connected to the system power supply 51. The fuel cell 24 is connected to the power line 52 via the inverter device 50. The electric power load 53 is a load driven by an AC power source, i.e., an electrical appliance such as a hair drier, a refrigerator, and a television, for example.

The auxiliary machinery includes the motor-driven pumps 41a and 42e (the water pump 41a and the fuel pump 42e), the ventilation air blower 15 and the cathode air blower 44a for supplying the source material, water, and air to the fuel cell module 20, and the motor-driven pump 32a (the water circulation pump 32a) for circulating the storage water, for example. The auxiliary machinery is driven by the DC voltage.

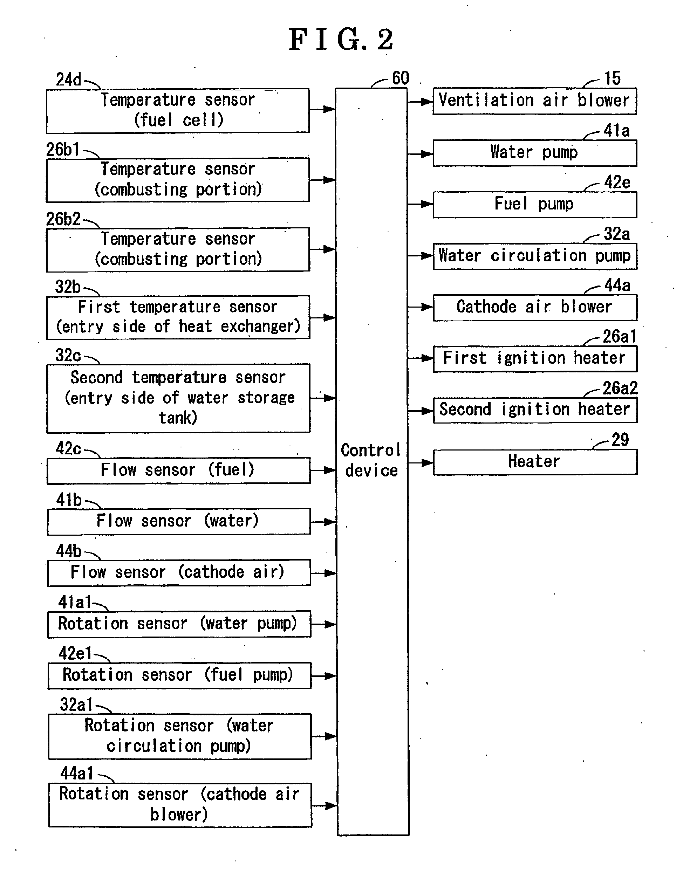

Further, the fuel cell system includes the control device 60. As illustrated in Fig. 2, the aforementioned temperature sensors 24d, 26b1, 26b2, 32b, 32c, the flow sensors 41b, 42c, 44b, the rotation sensors 32a1, 41a1, 42e1, 44a1, the pumps 32a, 41a, 42e, the blowers 15, 44a, the ignition heaters 26a1, 26a2, and the heater 29 are connected to the control device 60. The control device 60 controls the pumps 32a, 41a, 42e and the blowers 15, 44a serving as the supply devices so that a supply volume of fluid from each of the supply devices becomes equal to each target control value. The control device 60 includes a microcomputer having an input-output interface (I/O interface), a CPU, a RAM, and a ROM all of which are connected to one another via a bus. The CPU has a function to operate the fuel cell system. The RAM temporarily stores a variable necessary to perform a program for the operation of the fuel cell system. The ROM stores such program.

Each of the aforementioned pumps and blowers is configured to be driven by each of the electric motors.

A source material supply system L1 includes the fuel supply pipe 42, the fuel valves 42a, 42b, the flow sensor 42c, the desulfurizer 42d, and the fuel pump 42e. A water supply system L2 includes the water supply pipe 41, the water pump 41a and the flow sensor 41b. A cathode air (oxidant gas) supply system L3 includes the cathode air supply pipe 44, the cathode air blower 44a, the flow sensor 44b, and the filter 44c.

The water storage system, i.e., the exhaust heat recovery system 30, includes the hot water storage tank 31, the water circulation line 32, the heat exchanger 33, the first temperature sensor 32b, and the second temperature sensor 32c. A reforming system L4 at least includes the reforming portion 23. For example, the reforming system L4 includes the connection pipe 22a, the reforming portion 23, and the reformed gas supply pipe 43. An exhaust system L5 is a system through which the combustion gas from the fuel cell module 20 is discharged to the outside of the case 11. For example, the exhaust system L5 includes the fuel cell module 20, the combustion catalyst 28, the first connection pipe 45, the heat exchanger 33, and the second connection pipe 46.

The evaporating portion 22 belongs to both the source material supply system L1 and the water supply system L2. In addition, the manifold 25 belongs to both the cathode air supply system L3 and the reforming system L4.

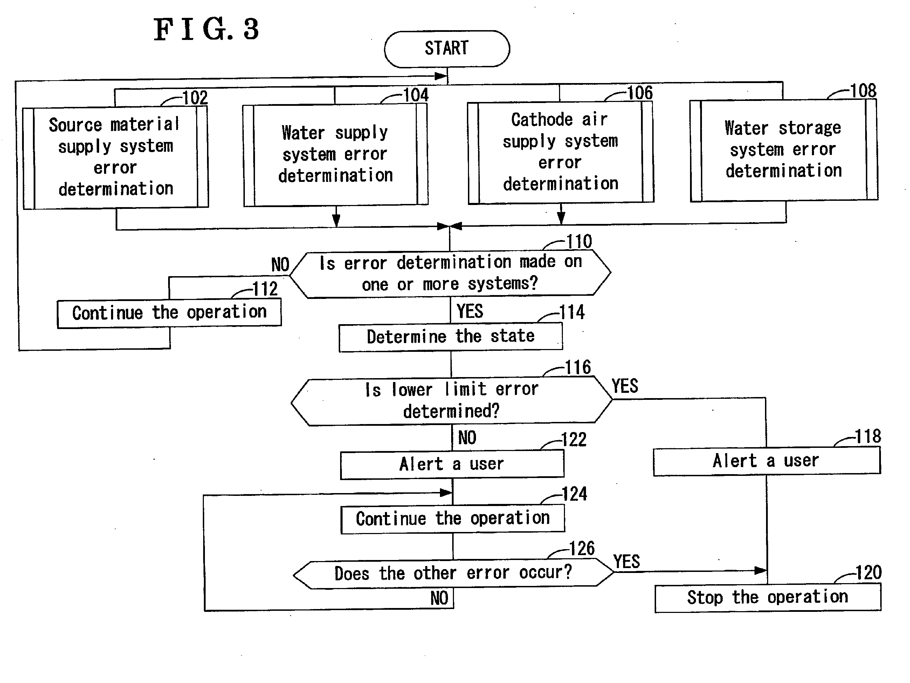

Next, an operation of the aforementioned fuel cell system will be explained. In a case where a start switch is turned on, the control device 60 starts performing a program corresponding to a flowchart illustrated in Fig. 3. During a power generation operation (or a start-up operation) of the fuel cell system, the control device 60 performs in parallel a source material supply system error determination for determining whether or not the source material supply system L1 malfunctions in step 102, a water supply system error determination for determining whether or not the water supply system L2 malfunctions in step 104, a cathode air supply system error determination for determining whether or not the cathode air supply system L3 malfunctions in step 106, and a water storage system error determination for determining whether or not the water storage system malfunctions in step 108.

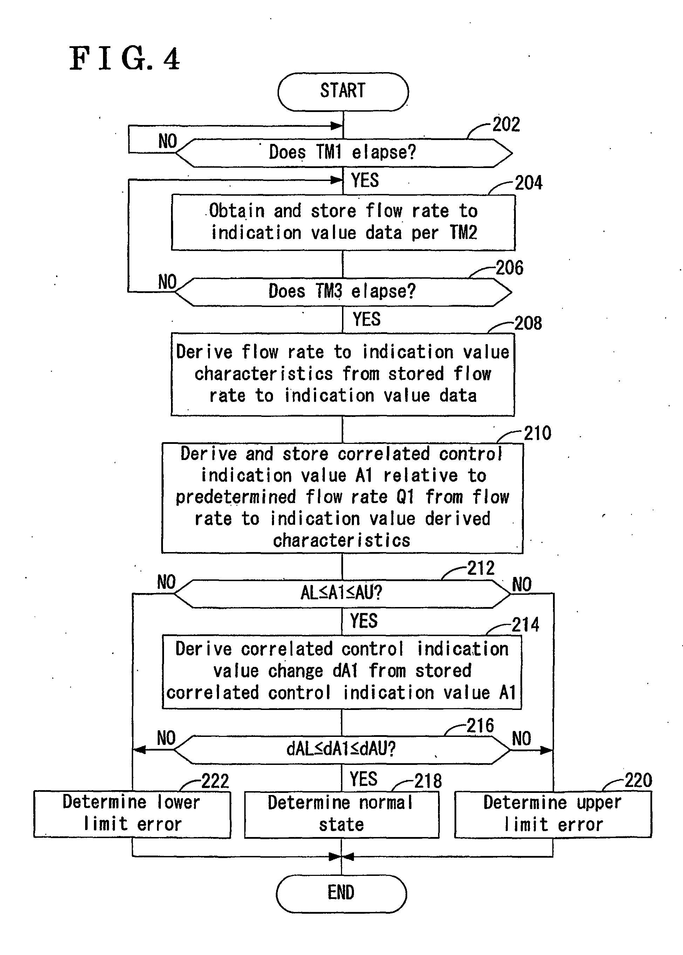

The source material supply system error determination will be explained with reference to the flowchart illustrated in Fig. 4. In a case where a first predetermined time TM1 elapses from a completion of a previous determination (which may be a start-up of the fuel cell system in a case of a first determination), the control device 60 determines YES in step 202 and the program proceeds to step 204. The control device 60 repeats NO determination in step 202 until the first predetermination time TM1 elapses from the completion of the previous determination. The first predetermined time TM1 corresponds to one week or one month, for example.

The control device 60 generates or develops flow rate to indication value derived characteristics based on data of a control indication value and a flow rate of fluid (or revolutions of the electric motor) obtained within a third predetermined time TM3 serving as a predetermined time during the actual power generation operation or start-up operation. In Fig. 4, step 204 to step 208 serve as a flow rate to indication value characteristics derivation portion. For example, a case where the supply device is the fuel pump 42e will be explained.

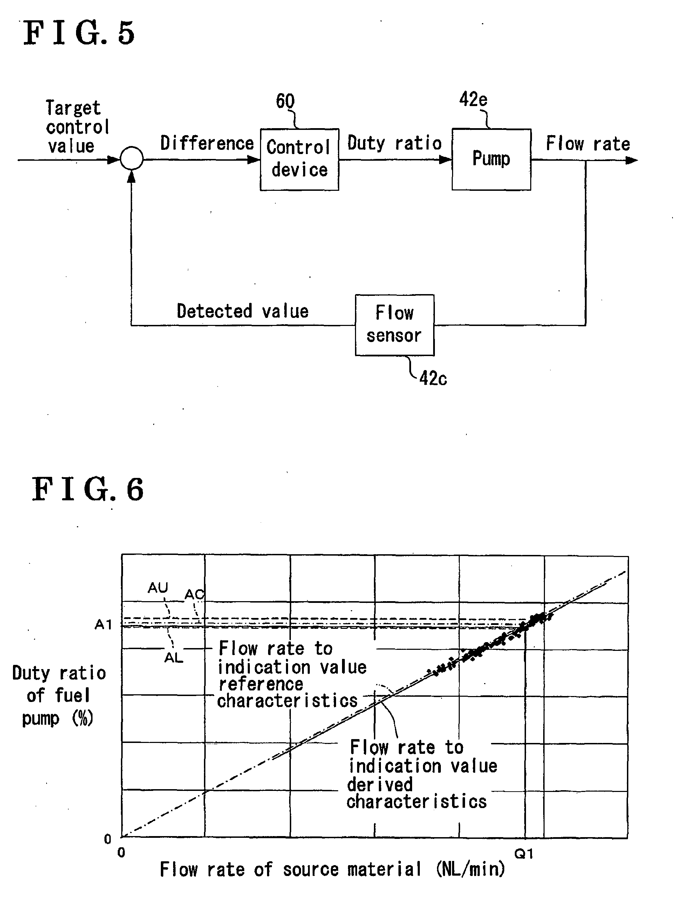

A method for controlling the supply device (i.e., a control method) will be explained with reference to Fig. 5. According to the embodiment, a feedback control is applied to the control method. That is, the control device 60 inputs a difference between a target control value and a detected value (for example, a flow rate) detected by a detection sensor (for example, the flow sensor 42c) serving as a detection device and outputs a duty ratio serving as the control indication value, based on the aforementioned difference, to the pump (for example, the fuel pump 42e) serving as the supply device. The control indication value is a control value instructed by the control device 60 to each of the supply devices (for example, to the fuel pump 42e). The control indication value is a duty ratio, for example. The flow rate is a flow rate per time unit of fluid (for example, the source material) supplied from each of the supply devices (for example, the fuel pump 42e). The flow rate is detected by the flow sensor (for example, the flow sensor 42c).

The target control value of each supply volume of fuel, water, and cathode air is specified on a basis of a generation load of the fuel cell 24. In addition, the target control value of the supply volume of the storage water is specified on a basis of a predetermined temperature specified beforehand. The source material supply system L1, the water supply system L2, and the cathode air supply system L3 will be hereinafter collectively referred to as the supply system. In addition, the fuel pump 42e provided at the source material supply system L1, the water pump 41a provided at the water supply system L2, and the cathode air blower 44a provided at the cathode air supply system L3 will be hereinafter collectively referred to as the supply device provided at the supply system.

In a case where the supply system including the supply device is rather blocked or obstructed, or completely blocked or obstructed, the fluid has difficulty flowing or is eventually inhibited from flowing. At this time, the detected value of the flow sensor tends to decrease and eventually becomes zero. On the other hand, because the supply device is feedback-controlled, the duty ratio increases. In addition, in a case where the supply system including the supply device suffers or tends to suffer from a leakage, the fluid flows easily. At this time, the detected value of the flow sensor tends to increase. On the other hand, because the supply device is feedback-controlled, the duty ratio decreases. Accordingly, the flow rate and the control indication value are correlated to each other. The malfunction (i.e., the error state) of the supply system is determined on a basis of the correlation between the flow rate and the control indication value.

Flow rate to indication value characteristics indicate the correlation between the flow rate and the control indication value, which is represented by a map or a calculation formula. The aforementioned flow rate to indication value derived characteristics are the flow rate to indication value characteristics derived on a basis of data of the actual control indication value and flow rate of fluid (or the revolutions of the electric motor) obtained within the predetermined time (the third predetermined time TM3) during the actual power generation operation or the start-up operation of the fuel cell system. The flow rate to indication value characteristics may be represented not only by the correlation between the flow rate and the control indication value but by a correlation between the revolutions of the electric motor for the supply device (or revolutions of the pump or the blower) having a high correlation to the flow rate and the control indication value.

Specifically, as illustrated in Fig. 4, the control device 60 obtains data of the control indication value and the flow rate per second predetermined time TM2 after the elapse of the first predetermined time TM1 until the third predetermined time TM3 elapses, and stores such data where the flow rate and the control indication value are correlated to each other in step 204. The third predetermined time TM3, which is specified to be shorter than the first predetermined time TM1, is equal to one day, for example. The second predetermined time TM2, which is specified to be shorter than the third predetermined time TM3, is equal to several seconds to several tens of seconds. Accordingly, the control device 60 stores the data where the flow rate for the third predetermined time TM3 and the control indication value are correlated to each other.

The control device 60 determines whether or not the third predetermined time TM3 elapses from time when the first predetermined time TM1 elapses in step 206. In a case where the third predetermined time TM3 does not elapse, the control device 60 determines NO in step 206 so that the program returns to step 204. In a case where the third predetermined time TM3 elapses, the control device 60 determines YES in step 206 so that the program proceeds to step 208.

Then, the control device 60 generates the flow rate to indication value derived characteristics on a basis of data where the flow rate for the third predetermined time TM3 and the control indication value are correlated to each other in step 208. Fig. 6 illustrates the flow rate to indication value derived characteristics by the control device 60. In Fig. 6, the flow rate to indication value derived characteristics related to the source material are illustrated. The stored data is approximated by least squares method, for example, to thereby generate the flow rate to indication value derived characteristics. Specifically, the approximation by a primary expression of [(control indication value) = a x (flow rate) - b] is applied to generate the flow rate to indication value derived characteristics.

Next, the control device 60 compares flow rate to indication value reference characteristics serving as a reference of characteristics between the flow rate and the control indication value stored beforehand, and the flow rate to indication value derived characteristics generated by the flow rate to indication value characteristics derivation portion so as to determine whether or not the supply system including the supply device malfunctions based on the comparison result in steps 210 to 222 serving as a supply system error determination portion.

With a usage of the actual fuel cell system, the control indication value is changed within a whole range of an output power of the fuel cell 24 so that the flow rate for such control indication value is detected. Based on data including the thus obtained flow rate and the control indication value correlated to each other, the flow rate to indication value reference characteristics are generated.

The flow rate to indication value reference characteristics may be obtained by simulation instead of the usage of the actual fuel cell system. In the flow rate to indication value reference characteristics, the flow rate and the control indication value are in direct proportion to each other as indicated by a dashed line in Fig. 6.

In step 210, the control device 60 calculates and stores the control indication value correlated to a predetermined value of the flow rate (or the revolutions of the electric motor) (i.e., a correlated control indication value) based on the flow rate to indication value derived characteristics generated by the flow rate to indication value characteristics derivation portion in step 208. Step 210 serves as a correlated control indication value calculation portion. Specifically, the control device 60 calculates and stores a correlated control indication value A (which is an absolute value) correlated to a predetermined flow rate Q1 serving as the aforementioned predetermined value of the flow rate from the flow rate to indication value derived characteristics illustrated in Fig. 6. The correlated control indication value A calculated at this time is defined to be a value A1.

Next, the control device 60 determines that the supply system (for example, the source material supply system L1) including the supply device (for example, the fuel pump 42e) is in a normal state in a case where the correlated control indication value A1 calculated in step 210 falls within a first predetermined range (i.e., a range from a value AL to a value AU, the range including both the values AL and AU) in step 212. On the other hand, in a case where the correlated control indication value A1 is out of the first predetermined range in step 212, the control device 60 determines that the supply system including the supply device is not in the normal state. Steps 212, 218 to 222 serve as a first determination portion.

The first predetermined range is derived from the flow rate to indication value reference characteristics on a basis of the predetermined flow rate Q1. That is, the control device 60 calculates a control indication value AC based on the predetermined flow rate Q1 from the flow rate to indication value reference characteristics illustrated in Fig. 6. A range including the control indication value AC corresponds to the first predetermined range including the value AU serving as an upper limit value and the value AL serving as a lower limit value. For example, the first predetermined range may be specified so as to include the control indication value AC as a central value. The first predetermined range is determined in view of variation in performance of each of the pumps and the blowers, for example, serving as the supply device, a tolerance (an instrumental error) of each of the flow sensors, and a difference in a pressure loss of each of the systems, for example, so that a wrong detection is inhibited from occurring due to the aforementioned variation or tolerance, for example.

In a case where the correlated control indication value A1 falls within the range from the value AL to the value AU (the range including both the values AL and AU), the control device 60 determines YES in step 212 to thereby determine that the supply system is in the normal state in step 218. In a case where the correlated control indication value A1 is greater than the value AU, the control device 60 determines NO in step 212 to thereby determine that the supply system is in an error state, specifically, in an upper limit error state in step 220. In a case where the correlated control indication value A1 is smaller than the value AL, the control device 60 determines NO in step 212 to thereby determine that the supply system is in the error state, specifically, in a lower limit error state in step 222.

Further, the control device 60 determines that the supply system (for example, the source material supply system L1) including the supply device (for example, the fuel pump 42e) is in the normal state in a case where a change quantity (a change) of the correlated control indication value calculated by the correlated control indication value calculation portion falls within a second predetermined range. In a case where the change quantity of the correlated control indication value calculated by the correlated control indication value calculation portion is out of the second predetermined range, the control device 60 determines that the supply system including the supply device is not in the normal state. Steps 214 to 222 serve as a second determination portion.

The second predetermined range is specified so that, in the second predetermined range, a wrong detection is inhibited from occurring due to a change of the auxiliary machinery within a deterioration allowable level thereof (auxiliary machinery characteristics), characteristics of a flow meter or a pump at an environmental temperature, for example. In addition, the second predetermined range may be specified on a basis of a range width of the first predetermined range, or the first predetermined time TM1, for example. An upper limit value of the second predetermined range is a positive value (for example, a value dAU) while a lower limit value of the second predetermined range is a negative value (for example, a value dAL). Each of the first predetermined range and the second predetermined range serves as a predetermined range.

The control device 60 obtains a correlated control indication value change quantity (a correlated control indication value change) dA serving as the change quantity of the correlated control indication value A based on the stored correlated control indication values (the plural correlated control indication values) A in step 214. Specifically, a difference between the correlated control indication value A presently derived and the correlated control indication value A previously derived and stored is calculated to obtain the correlated control indication value change quantity dA. The correlated control indication value change quantity dA calculated at this time is defined to be a value dA1.

Next, in a case where the correlated control indication value change quantity dA1 falls within the second predetermined range (from the value dAL to the value dAU, the range including both the values dAL and dAU), the control device 60 determines YES in step 216 to thereby determine that the supply system including the supply device (for example, the fuel pump 42e) is in the normal state in step 218. In a case where the correlated control indication value change quantity dA1 is greater than the value dAU, the control device 60 determines NO in step 216 to thereby determine the upper limit error of the supply system in step 220. In a case where the correlated control indication value change quantity dA1 is smaller than the value dAL, the control device 60 determines NO in step 216 to thereby determine the lower limit error of the supply system in step 222.

In a case where the correlated control indication value change quantity dA (dA1) is greater than the value dAU, the control device 60 may determine that the supply system is likely to be brought in the upper limit error, i.e., may determine a possibility of the upper limit error of the supply system. In addition, in a case where the correlated control indication value change quantity dA (dA1) is smaller than the value dAL, the control device 60 may determine that the supply system is likely to be brought in the lower limit error, i.e., may determine a possibility of the lower limit error of the supply system.

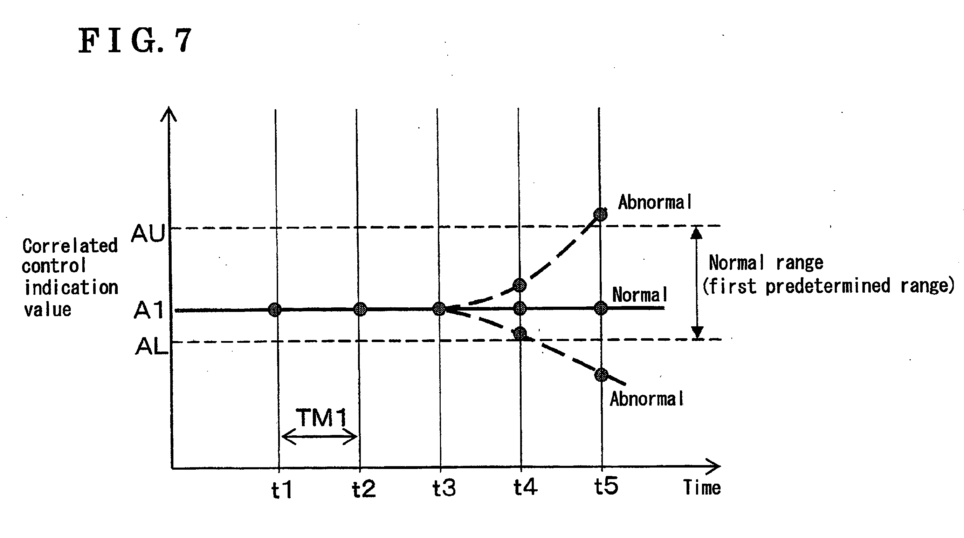

Specifically, as illustrated in Fig. 7, in a case where the correlated control indication value A is constantly equal to the value A1 from time t1 to time t5, which is indicated by a solid line in Fig. 7, the correlated control indication value change quantity dA is zero and thus falls within the second predetermined range. The control device 60 therefore determines YES in step 212 and step 216 to thereby determine that the supply system is in the normal state in step 218. An interval between time t1 and time t5 is equal to the first predetermined time TM1.

A case where the correlated control indication value A is constantly equal to the value A1 from time t1 to time t3 but is increasing from t3 will be explained. Such case is indicated by an upper dashed line in Fig. 7. At time t4, the correlated control indication value A is greater than the value A1 but still within the first predetermined range. Nevertheless, the correlated control indication value change quantity dA exceeds the upper limit value dAU of the second predetermined range. Therefore, the control device 60 determines YES and NO in step 212 and step 216, respectively to thereby determine the upper limit error (or the possibility of the upper limit error) of the supply system in step 220.

Further, at time t5, the correlated control indication value A is greater than the upper limit value AU of the first predetermined range. Thus, the control device 60 determines NO in step 212 to thereby determine the upper limit error of the supply system in step 220.

A case where the correlated control indication value A is decreasing from time t3 will be explained. Such case is indicated by a lower dashed line in Fig. 7. At time t4, the correlated control indication value A is smaller than the value A1 but still within the first predetermined range. Nevertheless, the correlated control indication value change quantity dA is below the lower limit value dAL of the second predetermined range. Therefore, the control device 60 determines YES and NO in step 212 and step 216, respectively to thereby determine the lower limit error (or the possibility of the lower limit error) of the supply system in step 222.

Further at time t5, the correlated control indication value A is smaller than the lower limit value AL of the first predetermined range. Thus, the control device 60 determines NO in step 212 to thereby determine the lower limit error of the supply system in step 222.

As mentioned above, the control device 60 determines whether the source material supply system L1 is in the normal state or the error state in step 102. In the case of the error state, the control device 60 then determines whether such error state corresponds to the upper limit error or the lower limit error.

The control device 60 determines, in the same way as the source material supply system L1, whether the water supply system L2 is in the normal state or the error state by the water supply system error determination portion (step 104), whether the cathode air supply system L3 is in the normal state or the error state by the cathode air supply system error determination portion (step 106), and whether the water storage system is in the normal state or the error state by the water storage system error determination portion (step 108). Steps 102 to 108 serve as the supply system error determination portion

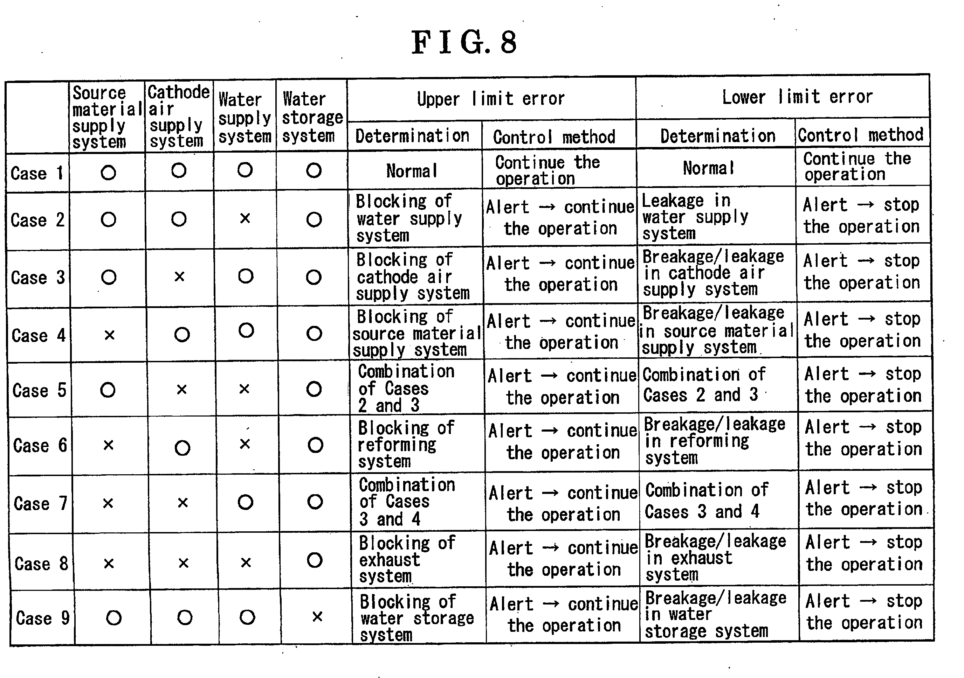

In a case where the control device 60 determines that all the aforementioned four systems (i.e., the source material supply system L1, the water supply system L2, the cathode air supply system L3, and the water storage system) are normal, the control device 60 determines NO in step 110 and thereafter the program proceeds to step 112. The control device 60 continues an operation state (an operation mode) of the fuel cell system obtained at a time when all the four systems are determined to be normal in step 112. For example, in a case where the operation mode of the fuel cell system at the time when all the four systems are determined to be normal in step 112 is the power generation operation, the power generation operation is continued. Such case corresponds to Case 1 in Fig. 8.

On the other hand, in a case where one or more of the four systems is determined to be abnormal, the control device 60 determines YES in step 110 and the program proceeds to step 114. In step 114, the control device 60 determines the state of the fuel cell system from a state determination table illustrated in Fig. 8 based on a determination result by each of the aforementioned error determination portions.

Cases 2 to 9 illustrated in Fig. 8 will be explained. In Case 2, the water supply system L2 only is in the error state. At this time, in the case of the upper limit error, the control device 60 determines that the water supply system L2 (for example, at least one of the water supply pipe 41, the evaporating portion 22, and the flow sensor 41 b) is blocked. In the case of the lower limit error, the control device 60 determines that the water supply system L2 is broken, for example, so that a leakage occurs (i.e., the water supply system L2 leaks).

In Case 3, the cathode air supply system L3 only is in the error state. At this time, in the case of the upper limit error, the control device 60 determines that the cathode air supply system L3 (for example, at least one of the cathode air supply pipe 44, the flow sensor 44b and the filter 44c) is blocked. In the case of the lower limit error, the control device 60 determines that the cathode air supply system L3 is broken, for example, so that a leakage occurs.

In Case 4, the source material supply system L1 only is in the error state. At this time, in the case of the upper limit error, the control device 60 determines that the source material supply system L1 (for example, at least one of the fuel supply pipe 42, each of the filters in the fuel valves 42a and 42b, the flow sensor 42c, the desulfurizer 42d, and the evaporating portion 22) is blocked. In the case of the lower limit error, the control device 60 determines that the source material supply system L1 is broken, for example, so that a leakage occurs.

In Case 5, the water supply system L2 and the cathode air supply system L3 are in the error state. At this time, in the case of the upper limit error, the control device 60 determines that the water supply system L2 and the cathode air supply system L3 are broken, for example, so that a leakage occurs.

In Case 6, the water supply system L2 and the source material supply system L1 are in the error state. At this time, in the case of the upper limit error, the control device 60 determines that the reforming system L4 (for example, at least one of the connection pipe 22a, the reforming portion 23, and the reformed gas supply pipe 43) is blocked. In the case of the lower limit error, the control device 60 determines that the reforming system L4 is broken, for example, so that a leakage occurs.

In Case 7, the source material supply system L1 and the cathode air supply system L3 are in the error state. At this time, in the case of the upper limit error, the control device 60 determines that the source material supply system L1 and the cathode air supply system L3 are blocked. In the case of the lower limit error, the control device 60 determines that the source material supply system L1 and the cathode air supply system L3 are broken, for example, so that a leakage occurs.

In Case 8, the source material supply system L1, the water supply system L2, and the cathode air supply system L3 are all in the error state. At this time, in the case of the upper limit error, the control device 60 determines that the exhaust system L5 (for example, at least one of the combustion catalyst 28 of the fuel cell module 20 and the second connection pipe 46) is blocked. In the case of the lower limit error, the control device 60 determines that the exhaust system L5 (for example, at least one of the fuel cell module 20, the first connection pipe 45, the heat exchanger 33 and the second connection pipe 46) is broken, for example, so that a leakage occurs.

In Case 9, the water storage system (i.e., the exhaust heat recovery system) 30 only is in the error state. At this time, in the case of the upper limit error, the control device 60 determines that the water storage system 30 (for example, at least one of the hot water storage tank 31, the water circulation line 32, and the heat exchanger 33) is blocked. In the case of the lower limit error, the control device 60 determines that the water storage system 30 is broken, for example, so that a leakage occurs.

In a case where the supply system error determination portion (step 102 to 108) determines that any one of the source material supply system L1, the water supply system L2, the cathode air supply system L3, and the water storage system is in the error state (or is likely to be in the error state) because the upper limit of the first or second predetermined range is exceeded, the control device 60 continues the power generation operation or the start-up operation of the fuel cell system while making an alert by an alert portion in steps 122 and 124 serving as an operation continuation portion. On the other hand, in a case where the supply system error determination portion (step 102 to 108) determines that any one of the source material supply system L1, the water supply system L2, the cathode air supply system L3, and the water storage system is in the error state (or is likely to be in the error state) because the lower limit of the first or second predetermined range is not reached, the control device 60 performs a stop operation of the fuel cell system while making an alert by the alert portion in steps 118 and 120 serving as an operation stop portion.

Specifically, the control device 60 determines whether or not the lower limit error is determined by the supply system error determination portion (steps 102 to 108). In the case of the upper limit error, the control device 60 determines NO in step 116. In step 122, the control device 60 indicates and alerts the content determined in step 114 (a state determination portion). The step 122 serves as the alert portion. The alert by the alert portion may be achieved by a display (an LED screen, a lamp, for example) or a sound via a speaker, for example. In step 124, the control device 60 continues the operation state (the operation mode) of the fuel cell system obtained when the determination is made by the supply system error determination portion.

Accordingly, in a state where the power generation operation or the start-up operation of the fuel cell system is continued without being stopped, a user of the fuel cell system may execute a maintenance (a component replacement by the user or asking a repair, for example) depending on the content of the alert.

Then, because the fuel cell system is not in the normal operation state, the control device 60 performs the stop operation so as to stop the operation of the fuel cell system in step 120 when detecting the other error during the aforementioned operation state. Specifically, the control device 60 determines whether or not the other error occurs in step 126. In the case that the other error does not occur, the control device 60 determines NO in step 126 and the program returns to step 124. In the case that the other error occurs, the control device 60 determines YES in step 126 and the program proceeds to step 120.

On the other hand, in a case where the control device 60 determines the lower limit error, the control device 60 determines YES in step 116. The control device 60 indicates and alerts the content determined in step 114 (the state determination portion) in step 118 (the alert portion) in the same way as step 122. In association with the alert, the control device 60 performs the stop operation of the fuel cell system in step 120 serving as the operation stop portion.

As mentioned above, according to the embodiment, the flow rate to indication value characteristics derivation portion (steps 204 to 208) generates or develops the map or the calculation formula indicating the correlation between the control indication value for each of the supply devices 32a, 41a, 42e, and 44a from the control device 60 and the flow rate of fluid supplied by each of the supply devices 32a, 41a, 42e, and 44a or the revolutions of the electric motor of each of the supply devices 32a, 41a, 42e, and 44a, based on the data of the control indication value and the flow rate of fluid or the revolutions of the electric motor obtained within the third predetermined time TM3 during the actual power generation operation or the start-up operation. The supply system error determination portion (steps 210 to 222) compares the flow rate to indication value reference characteristics stored beforehand and the flow rate to indication value derived characteristics derived by the flow rate to indication value characteristics derivation portion, and determines whether or not the supply system including the supply device is in the error state based on the aforementioned comparison result. The state determination portion (step 114) determines the state of the fuel cell system based on the determination result by the supply system error determination portion.

Accordingly, the flow rate to indication value derived characteristics derived on a basis of the data of the control indication value and the flow rate of fluid or the revolutions of the electric motor obtained within the predetermined time (the third predetermined time TM3) during the actual power generation operation or the start-up operation is compared with the flow rate to indication value reference characteristics stored beforehand. Thus, it is determinable whether or not each of the supply systems of the source material, water, or oxidant gas is in the error state. As a result, it may not be required to provide an exclusive time for determining the error state during the stop operation of the fuel cell system. The determination of the error state may be accurately performed during the normal power generation operation or the start-up operation. In addition, because the determination of the error state may be performed with a usage of actual data including an influence of a disturbance or data in the actual usage of the user, the determination of the error state is accurately performed without an influence of the disturbance or a fluctuation of a user load.

Further, the error state is determinable before the error state is actually obtained to thereby achieve the accurate operations (the maintenance or the stop operation, for example). The aforementioned error state determination may be achieved regardless of a difference in electric power load depending on a user. Even in a case where power generating equipment rated at 700W is used in a home where an electric power load is low (300W to 500W), for example, the state of the power generating equipment under a predetermined operation condition is calculated on a basis of date obtained when the electric power load is 300W to 500W. When the electric power load is low, a pressure loss and a duty ratio are also low, which may lead to a difficulty in detection and an occurrence of a wrong detection. According to the embodiment, the possible error is determined before the error state is actually obtained, thereby achieving the accurate operation.

The supply system error determination portion (steps 102 to 108, 210 to 222) includes the correlated control indication value calculation portion (step 210) and the first determination portion (steps 212, 218 to 222). The correlated control indication value calculation portion (step 210) calculates the control indication value correlated to the predetermined value (i.e., the predetermined flow rate Q1) of the flow rate or the revolutions of the electric motor. The first determination portion (steps 212, 218 to 222) determines that the supply system including the supply device is in the normal state when the correlated control indication value calculated by the correlated control indication value calculation portion falls within the first predetermined range that is derived from the flow rate to indication value reference characteristics on a basis of the predetermined value, and otherwise determines that the supply system including the supply device is in the error state when the correlated control indication value is out of the first predetermined range. Accordingly, the error determination of the supply system may be easily and specifically performed. Further, the state of the fuel cell system may be further accurately obtained.

The supply system error determination portion (steps 102 to 108, 210 to 222) further includes the second determination portion (steps 214 to 222) determining that the supply system including the supply device is in the normal state in a case where the change quantity of the correlated control indication value calculated by the correlated control indication value calculation portion is within the second predetermined range and determining that the supply system including the supply device is in the error state in a case where the change quantity of the correlated control indication value is out of the second predetermined range in a state where the first determination portion (steps 212 and 218) determines that the supply system is in the normal state. Accordingly, at a time when it is determined that the supply system is in the normal state, a possible error in the near future may be predicted and alerted beforehand, which leads to an early action for the possible error.

In a case where the supply system error determination portion determines that one of the supply systems is in the upper limit error state because the upper limit of the predetermined range (the first or second predetermined range) is exceeded, the state determination portion (step 114) determines that the supply system for which the error determination is made is blocked or likely to be blocked. In a case where the supply system error determination portion determines that one of the supply systems is in the lower limit error state because the lower limit of the predetermined range (the first or second predetermined range) is not reached, the state determination portion (step 114) determines that the supply system for which the error determination is made leaks or likely to leak (i.e., the leakage occurs or possibly occurs at the supply system for which the error determination is made). Accordingly, the state of the fuel cell system may be accurately and specifically obtained.

In addition, the state determination portion (step 114) determines that the reforming system L4 at least including the reforming portion 23 is blocked or likely to be blocked in a case where the supply system error determination portion determines that the source material supply system L1 and the water supply system L2 are in the upper limit error state because the upper limit of the predetermined range (the first or second predetermined range) is exceeded. In a case where the supply system error determination portion determines that the source material supply system L1 and the water supply system L2 are in the lower error state because the lower limit of the predetermined range (the first or second predetermined range) is not reached, the state determination portion (step 114) determines that the leakage occurs or possibly occurs at the reforming system L4. Accordingly, the state of the fuel cell system may be accurately and specifically obtained.

The state determination portion (step 114) determines that the exhaust system L5 is blocked or is likely to be blocked in a case where the supply system error determination portion determines that all the supply systems (i.e., the source material supply system L1, the water supply system L2, and the cathode air supply system L3) are in the upper limit error state because the upper limit of the predetermined range is exceeded. In a case where the supply system error determination portion determines that all the supply systems are in the lower limit error state because the lower limit of the predetermined range is not reached, the state determination portion (step 114) determines that the leakage or possible leakage occurs at the exhaust system L5. Accordingly, the state of the fuel cell system may be accurately and specifically obtained.

The operation continuation portion (step 124) continues the power generation operation or the start-up operation of the fuel cell system while making an alert by the alert portion (step 122) in a case where the supply system error determination portion (step 102 to 108) determines that one of the supply systems is in the upper limit error state because the upper limit of the predetermined range is exceeded. The stop operation portion (step 120) performs the stop operation of the fuel cell system while making an alert by the alert portion (step 118) in a case where the supply system error determination portion (steps 102 to 108) determines that one of the supply systems is in the lower limit error state because the lower limit of the predetermined range is not reached. Accordingly, an appropriate operation of the fuel cell system is achieved on a basis of the state of the fuel cell system after the error determination is made.

The water storage system 30 at least includes the water circulation pump 32a (the storage water supply device) configured to be driven by the electric motor and circulating the storage water that recovers the exhaust heat of the fuel cell 24. The error determination may be also accurately performed on the water storage system 30 during the normal power generation operation or the start-up operation without an exclusive time provided for determining the error determination in the stop state of the fuel cell system. In addition, because the actual data including the influence of the disturbance or the data in the actual usage of the user is used for the error determination, the error determination may be accurately performed without the influence of the disturbance or the fluctuation of the user load, for example.

In addition, instead of the correlation between the flow rate and the control indication value, the correlation between the revolutions of the pump or the blower (or the revolutions of the electric motor) and the control indication value may be used. Accordingly, even when a flow sensor is not provided, the error determination of the supply system is obtained.

Further, according to the aforementioned embodiment, the fuel cell is a solid oxide fuel cell (SOFC). Alternatively, the fuel cell may be a polymer electrolyte fuel cell (PEFC), for example. In this case, the fuel cell system includes a fuel cell, a reformer, and an exhaust heat recovery system (which may be similar to the aforementioned exhaust heat recovery system 30). The fuel cell is supplied with a fuel gas (a hydrogen gas) and an oxidant gas (air including oxygen) so as to generate an electric power by a chemical reaction between hydrogen and oxygen and to output a direct-current voltage (for example, 40V).

The reformer reforms a fuel (a source fuel) by using water vapor so as to supply a reformed gas (a hydrogen-rich reformed gas) to the fuel cell. The reformer includes a burner (a combusting portion), a reforming portion, a carbon monoxide shift reaction portion (which will be hereinafter referred to as a CO shift portion), and a carbon monoxide selective oxidation reaction portion (which will be hereinafter referred to as a CO selective oxidation portion). A natural gas, LPG, kerosene, gasoline, and methanol, for example, may be applied to the source fuel.

The burner is supplied with the fuel and air for the combustion from the outside in the start-up operation. In addition, the burner is supplied with an anode-off gas (which is supplied to the fuel cell but not used thereat and is thus discharged) from a fuel electrode of the fuel cell in the steady operation. The burner burns each combustible gas supplied to the burner so as to send a combustion gas to the reforming portion.

The reforming portion reforms a mixed gas obtained by a mixture of the fuel supplied from the outside and the water vapor (water) from an evaporator by means of a catalyst filled in the reforming portion to thereby generate hydrogen gas and carbon monoxide gas (the water vapor reforming reaction). At the same time, carbon monoxide generated during the water vapor reforming reaction and water vapor react so as to be converted to hydrogen gas and carbon dioxide, i.e., the carbon monoxide shift reaction occurs. The thus generated gas (the reformed gas) is sent to the CO shift portion.

The CO shift portion causes carbon monoxide and water vapor contained in the reformed gas to react with a catalyst filled in the CO shift portion, thereby generating hydrogen gas and carbon dioxide gas. Accordingly, the reformed gas in which a carbon monoxide concentration is reduced is sent to the CO selective oxidation portion.

The CO selective oxidation portion causes carbon monoxide remaining in the reformed gas and air supplied from the outside for CO cleaning to react with a catalyst filled in the CO selective oxidation portion, thereby generating carbon dioxide. Accordingly, the reformed gas in which the carbon monoxide concentration is further reduced (10 ppm or lower) is sent to the fuel electrode of the fuel cell.

## Claims

1. A fuel cell system comprising:
a fuel cell (24) generating an electric power by a fuel and an oxidant gas;
a reforming portion (23) generating the fuel by a source material and water;
a source material supply system (L1) including a source material supply device (42e) configured to be driven by an electric motor and supplying the source material;
a water supply system (L2) including a water supply device (41a) configured to be driven by an electric motor and supplying the water;
a cathode gas supply system (L3) including an oxidant gas supply device (44a) configured to be driven by an electric motor and supplying the oxidant gas; and
a control device (60) controlling each of the source material supply device (42e), the water supply device (41a) and the oxidant gas supply device (44a) so that a supply volume of a fluid supplied from each of the source material supply device (42e), the water supply device (41a) and the oxidant gas supply device (44a) becomes equal to a target control value, the fluid including the fuel, the oxidant gas, the source material, and the water, wherein
the control device (60) includes:
a flow rate to indication value characteristics derivation portion (204-208) obtaining data of a control indication value instructed to each of the source material supply device (42e), the water supply device (41a) and the oxidant gas supply device (44a) and a flow rate of the fluid supplied by each of the source material supply device (42e), the water supply device (41a) and the oxidant gas supply device (44a) or revolutions of the electric motor of each of the source material supply device (42e), the water supply device (41a) and the oxidant gas supply device (44a) within a predetermined time (TM3) during an actual power generation operation or a start-up operation, and generating a map or a calculation formula indicating a correlation between the control indication value and the flow rate of the fluid or the revolutions of the electric motor based on the data of the control indication value and the flow rate of the fluid or the revolutions of the electric motor obtained within the predetermined time (TM3);
a supply system error determination portion (102-108, 210-222) comparing flow rate to indication value reference characteristics serving as a reference of characteristics between the flow rate and the control indication value and stored beforehand and flow rate to indication value derived characteristics generated by the flow rate to indication value characteristics derivation portion (204-208) to determine on a basis of a comparison result whether each of the source material supply system (L1), the water supply system (L2), and the cathode gas supply system (L3) including the source material supply device (42e), the water supply device (41a), and the oxidant gas supply device (44a) respectively is in a normal state or an error state;
a state determination portion (114) determining a state of the fuel cell system based on a determination result by the supply system error determination portion (102-108, 210-222); and
an alert portion (122, 118) making an alert in a case where the state determined by the state determination portion (114) indicates an error,
wherein the supply system error determination portion (102-108, 210-222) includes a correlated control indication value calculation portion (210) calculating the control indication value correlated to a predetermined value (Q1) of the flow rate or the revolutions of the electric motor from the flow rate to indication value derived characteristics generated by the flow rate to indication value characteristics derivation portion (204-208) to obtain a correlated control indication value (A,A1) for each of the source material supply device (42e), the water supply device (41a) and the oxidant gas supply device (44a), and includes a first determination portion (212, 218 to 222) determining that each of the source material supply system (L1), the water supply system (L2), and the cathode gas supply system (L3) including the source material supply device (42e), the water supply device (41a), and the oxidant gas supply device (44a) respectively is in the normal state in a case where the correlated control indication value (A, A1) for each of the source material supply device (42e), the water supply device (41a) and the oxidant gas supply device (44a) calculated by the correlated control indication value calculation portion (210) falls within a first predetermined range generated on a basis of the predetermined value (Q1) from the flow rate to indication value reference characteristics, and determining that each of the source material supply system (L1), the water supply system (L2), and the cathode gas supply system (L3) including the source material supply device (42e), the water supply device (41a) and the oxidant gas supply device (44a) respectively is in the error state in a case where the correlated control indication value (A, A1) for each of the source material supply device (42e), the water supply device (41a) and the oxidant gas supply device (44a) calculated by the correlated control indication value calculation portion (210) is out of the first predetermined range.

2. The fuel cell system according to claim 1, wherein the supply system error determination portion (102-108, 210-222) includes a second determination portion (214-222) determining that each of the source material supply system (L1), the water supply system (L2), and the cathode gas supply system (L3) including the source material supply device (42e), the water supply device (41a), and the oxidant gas supply device (44a) respectively is in the normal state in a case where a change quantity of the correlated control indication value (dA, dA1) for each of the source material supply device (42e), the water supply device (41a) and the oxidant gas supply device (44a) calculated by the correlated control indication value calculation portion (210) falls within a second predetermined range and determining that each of the source material supply system (L1), the water supply system (L2), and the cathode gas supply system (L3) including the source material supply device (42e), the water supply device (41a) and the oxidant gas supply device (44a) respectively is in the error state in a case where the change quantity of the correlated control indication value (dA, dA1) for each of the source material supply device (42e), the water supply device (41a) and the oxidant gas supply device (44a) calculated by the correlated control indication value calculation portion (210) is out of the second predetermined range in a state where the first determination portion (212, 218 to 222) determines that each of the source material supply system (L1), the water supply system (L2), and the cathode gas supply system (L3) is in the normal state.

3. The fuel cell system according to claim 2, wherein in a case where the supply system error determination portion (102-108, 210-222) determines that any one of the source material supply system (L1), the water supply system (L2), and the cathode gas supply system (L3) is in the error state because an upper limit of one of the first and second predetermined ranges is exceeded, the state determination portion (114) determines that one of the source material supply system (L1), the water supply system (L2), and the cathode gas supply system (L3) determined to be in the error state is blocked or likely to be blocked, and in a case where the supply system error determination portion (102-108, 210-222) determines that any one of the source material supply system (L1), the water supply system (L2), and the cathode gas supply system (L3) is in the error state because a lower limit of one of the first and second predetermined ranges is not reached, the state determination portion (114) determines that one of the source material supply system (L1), the water supply system (L2), and the cathode gas supply system (L3) determined to be in the error state leaks or likely to leak.

4. The fuel cell system according claim 2, further comprising a reforming system (L4) at least including the reforming portion (23), wherein the state determination portion (114) determines that the reforming system (L4) is blocked or likely to be blocked in a case where the supply system error determination portion (102-108, 210-222) determines that the source material supply system (L1) and the water supply system (L2) are in the error state because an upper limit of one of the first and second predetermined ranges is exceeded and determines that the reforming system (L4) leaks or likely to leak in a case where the supply system error determination portion (102-108, 210-222) determines that the source material supply system (L1) and the water supply system (L2) are in the error state because a lower limit of one of the first and second predetermined ranges is not reached.

5. The fuel cell system according to claim 2, further comprising a combusting portion (26) burning an anode-off gas of the fuel cell (24) to generate a combustion gas and heating the reforming portion (23) by the combustion gas, and an exhaust system (L5) discharging the combustion gas, wherein the state determination portion (114) determines that the exhaust system (L5) is blocked or likely to be blocked in a case where the supply system error determination portion (102-108, 210-222) determines that all of the source material supply system (L1), the water supply system (L2), and the cathode gas supply system (L3) are in the error state because an upper limit of one of the first and second predetermined ranges is exceeded, and determines that the exhaust system (L5) leaks or likely to leak in a case where the supply system error determination portion (102-108, 210-222) determines that all of the source material supply system (L1), the water supply system (L2), and the cathode gas supply system (L3) are in the error state because a lower limit of one of the first and second predetermined ranges is not reached.

6. The fuel cell system according to any one of claims 2 through 5, further comprising an operation continuation portion (122, 124) continuing a power generation operation or a start-up operation of the fuel cell system while making an alert by the alert portion (122, 118) in a case where the supply system error determination portion (102-108, 210-222) determines that any one of the source material supply system (L1), the water supply system (L2), and the cathode gas supply system (L3) is in the error state because an upper limit of one of the first and second predetermined ranges is exceeded, and an operation stop portion (118, 120) performing a stop operation of the fuel cell system while making an alert by the alert portion (122, 118) in a case where the supply system error determination portion (102-108, 210-222) determines that any one of the source material supply system (L1), the water supply system (L2), and the cathode gas supply system (L3) is in the error state because a lower limit of one of the first and second predetermined ranges is not reached.

7. The fuel cell system according to any one of claims 1 through 3, further comprising a water storage system (30) at least including a storage water supply device (32a) configured to be driven by an electric motor and circulating a storage water that recovers an exhaust heat of the fuel cell (24).

## Patentansprüche

1. Brennstoffzellensystem mit:
einer Brennstoffzelle (24), die durch einen Brennstoff und ein Oxidationsmittelgas elektrischen Strom erzeugt;
einem Reformierabschnitt (23), der den Brennstoff durch ein Ausgangsmaterial und Wasser erzeugt;
einem Ausgangsmaterial-Zufuhrsystem (L1), das eine Ausgangsmaterial-Zufuhrvorrichtung (42e) aufweist, die gestaltet ist, von einem Elektromotor angetrieben zu werden, und das Ausgangsmaterial zuführt;
einem Wasser-Zufuhrsystem (L2), das eine Wasser-Zufuhrvorrichtung (41a) aufweist, die gestaltet ist, von einem Elektromotor angetrieben zu werden, und das Wasser zuführt;
einem Kathodengas-Zufuhrsystem (L3), das eine Oxidationsmittelgas-Zufuhrvorrichtung (44a) aufweist, die gestaltet ist, von einem Elektromotor angetrieben zu werden, und das Oxidationsmittelgas zuführt; und
einer Steuerungsvorrichtung (60), die jede der Ausgangsmaterial-Zufuhrvorrichtung (42e), der Wasser-Zufuhrvorrichtung (41a) und der Oxidationsmittelgas-Zufuhrvorrichtung (44a) so steuert, dass ein Zufuhrvolumen eines Fluids, das von jeder der Ausgangsmaterial-Zufuhrvorrichtung (42e), der Wasser-Zufuhrvorrichtung (41a) und der Oxidationsmittelgas-Zufuhrvorrichtung (44a) zugeführt wird, gleich einem Sollsteuerungswert wird, wobei das Fluid den Brennstoff, das Oxidationsmittelgas, das Ausgangsmaterial und das Wasser einschließt, wobei
die Steuerungsvorrichtung (60) Folgendes aufweist:
einen Durchfluss-Anzeigewert-Kennlinienableitungsabschnitt (204-208), der während eines tatsächlichen Stromerzeugungsbetriebs oder eines Anfahrbetriebs innerhalb einer vorbestimmten Zeit (TM3) Daten eines Steuerungsanzeigewerts, der jeder der Ausgangsmaterial-Zufuhrvorrichtung (42e), der Wasser-Zufuhrvorrichtung (41a) und der Oxidationsmittelgas-Zufuhrvorrichtung (44a) angewiesen wird, und eines Durchflusses des Fluids, das von jeder der Ausgangsmaterial-Zufuhrvorrichtung (42e), der WasserZufuhrvorrichtung (41e) und der Oxidationsmittelgas-Zufuhrvorrichtung (44e) zugeführt wird, oder von Umdrehungen des Elektromotors von jeder der Ausgangsmaterial-Zufuhrvorrichtung (42e), der Wasser-Zufuhrvorrichtung (41a) und der Oxidationsmittelgas-Zufuhrvorrichtung (44a) ermittelt und beruhend auf den innerhalb der vorbestimmten Zeit (TM3) ermittelten Daten des Steuerungsanzeigewerts und des Durchflusses des Fluids oder der Umdrehungen des Elektromotors ein Kennfeld oder eine Berechnungsformel erzeugt, das/die eine Korrelation zwischen dem Steuerungsanzeigewert und dem Durchfluss des Fluids oder den Umdrehungen des Elektromotors anzeigt;
einen Zufuhrsystemfehler-Feststellungsabschnitt (102-108, 210-222), der Durchfluss-Anzeigewerte-Bezugskennlinien, die als ein Kennlinienbezug zwischen dem Durchfluss und dem Steuerungsanzeigewert dienen und zuvor gespeichert wurden, und abgeleitete Durchfluss-Anzeigewert-Kennlinien, die von dem Durchfluss-Anzeigewert-Kennlinienableitungsabschnitt (204-208) erzeugt werden, vergleicht, um auf Grundlage eines Vergleichsergebnisses festzustellen, ob sich jedes des Ausgangsmaterial-Zufuhrsystems (L1), des Wasser-Zufuhrsystems (L2) und des Kathodengas-Zufuhrsystems (L3), die jeweils die Ausgangsmaterial-Zufuhrvorrichtung (42e), die Wasser-Zufuhrvorrichtung (41a) und die Oxidationsmittelgas-Zufuhrvorrichtung (44a) aufweisen, in einem Normalzustand oder einem Fehlerzustand befindet;
einen Zustand-Feststellungsabschnitt (114), der beruhend auf einem Feststellungsergebnis durch den Zufuhrsystemfehler-Feststellungsabschnitt (102-108, 210-222) einen Zustand des Brennstoffzellensystems feststellt; und
einen Alarmabschnitt (122, 118), der in einem Fall, in dem der von dem Zustand-Feststellungsabschnitt (114) festgestellte Zustand einen Fehler anzeigt, einen Alarm auslöst,
wobei der Zufuhrsystemfehler-Feststellungsabschnitt (102-108, 210-222) einen Berechnungsabschnitt für einen korrelierten Steuerungsanzeigewert (210) aufweist, der anhand der abgeleiteten Durchfluss-Anzeigewert-Kennlinien, die von dem Durchfluss-Anzeigewert-Kennlinien-Ableitungsabschnitt (204-208) erzeugt werden, den mit einem vorbestimmten Wert (Q1) des Durchflusses oder der Umdrehungen des Elektromotors korrelierenden Steuerungsanzeigewert berechnet, um für jede der Ausgangsmaterial-Zufuhrvorrichtung (42e), der Wasser-Zufuhrvorrichtung (41a) und der Oxidationsmittelgas-Zufuhrvorrichtung (44a) einen korrelierten Steuerungsanzeigewert (A, A1) zu ermitteln, und einen ersten Feststellungsabschnitt (212, 218 bis 222) aufweist, der in einem Fall, in dem der korrelierte Steuerungsanzeigewert (A, A1) für jede der Ausgangsmaterial-Zufuhrvorrichtung (42e), der Wasser-Zufuhrvorrichtung (41a) und der Oxidationsmittelgas-Zufuhrvorrichtung (44a), der von dem Berechnungsabschnitt für den korrelierten Steuerungsanzeigewert (210) berechnet wird, in einen ersten vorbestimmten Bereich fällt, der auf Grundlage des vorbestimmten Werts (Q1) anhand der Durchfluss-Anzeigewert-Bezugskennlinien erzeugt wird, feststellt, dass sich jedes des Ausgangsmaterial-Zufuhrsystems (L1), des Wasser-Zufuhrsystems (L2) und des Kathodengas-Zufuhrsystems (L3), die jeweils die Ausgangsmaterial-Zufuhrvorrichtung (42e), die Wasser-Zufuhrvorrichtung (41a) und die Oxidationsgas-Zufuhrvorrichtung (44a) aufweisen, im Normalzustand befindet, und in einem Fall, in dem der korrelierte Steuerungsanzeigewert (A, A1) für jede der Ausgangsmaterial-Zufuhrvorrichtung (42e), der Wasser-Zufuhrvorrichtung (41a) und der Oxidationsmittelgas-Zufuhrvorrichtung (44a), der von dem Berechnungsabschnitt für den korrelierten Steuerungsanzeigewert (210) berechnet wird, außerhalb des ersten vorbestimmten Bereiches liegt, feststellt, dass sich jedes des Ausgangsmaterial-Zufuhrsystems (L1), des Wasser-Zufuhrsystems (L2) und des Kathodengas-Zufuhrsystems (L3), die jeweils die Ausgangsmaterial-Zufuhrvorrichtung (42e), die Wasser-Zufuhrvorrichtung (41e) und die Oxidationsmittelgas-Zufuhrvorrichtung (44a) aufweisen, im Fehlerzustand befindet.

2. Brennstoffzellensystem nach Anspruch 1, wobei der Zufuhrsystemfehler-Feststellungsabschnitt (102-108, 210-222) einen zweiten Feststellungsabschnitt (214-222) aufweist, der in einem Zustand, in dem der erste Feststellungsabschnitt (212, 218 bis 222) feststellt, dass sich jedes des Ausgangsmaterial-Zufuhrsystems (L1), des Wasser-Zufuhrsystems (L2) und des Kathodengas-Zufuhrsystems (L3) im Normalzustand befindet, in einem Fall, in dem eine Änderungsgröße des korrelierten Steuerungsanzeigewerts (dA, dA1) für jede der Ausgangsmaterial-Zufuhrvorrichtung (42e), der Wasser-Zufuhrvorrichtung (41a) und der Oxidationsgas-Zufuhrvorrichtung (44a), der von dem Berechnungsabschnitt für den korrelierten Steuerungsanzeigewert (210) berechnet wird, in einen zweiten vorbestimmten Bereich fällt, feststellt, dass sich jedes des Ausgangsmaterial-Zufuhrsystems (L1), des Wasser-Zufuhrsystems (L2) und des Kathodengas-Zufuhrsystems (L3), die jeweils die Ausgangsmaterial-Zufuhrvorrichtung (42e), die Wasser-Zufuhrvorrichtung (41a) und die Oxidationsmittelgas-Zufuhrvorrichtung (44a) aufweisen, im Normalzustand befindet, und in einem Fall, in dem die Änderungsgröße des korrelierten Steuerungsanzeigewerts (dA, dA1) für jede der Ausgangsmaterial-Zufuhrvorrichtung (42e), der Wasser-Zufuhrvorrichtung (41a) und der Oxidationsmittelgas-Zufuhrvorrichtung (44a), der von dem Berechnungsabschnitt für den korrelierten Steuerungsanzeigewert (210) berechnet wird, außerhalb des zweiten vorbestimmten Bereiches liegt, feststellt, dass sich jedes des Ausgangsmaterial-Zufuhrsystems (L1), des Wasser-Zufuhrsystems (L2) und des Kathodengas-Zufuhrsystems (L3), die jeweils die Ausgangsmaterial-Zufuhrvorrichtung (42e), die Wasser-Zufuhrvorrichtung (41a) und die Oxidationsmittelgas-Zufuhrvorrichtung (44a) aufweisen, im Fehlerzustand befindet.

3. Brennstoffzellensystem nach Anspruch 2, wobei der Zustand-Feststellungsabschnitt (114) in einem Fall, in dem der Zufuhrsystemfehler-Feststellungsabschnitt (102-108, 210-222) feststellt, dass sich irgendeines des Ausgangsmaterial-Zufuhrsystems (L1), des Wasser-Zufuhrsystems (L2) und des Kathodengas-Zufuhrsystems (L3) im Fehlerzustand befindet, weil eine Obergrenze von einem der ersten und zweiten vorbestimmten Bereiche überschritten wird, feststellt, dass eines des Ausgangsmaterial-Zufuhrsystems (L1), des Wasser-Zufuhrsystems (L2) und des Kathodengas-Zufuhrsystems (L3), bei dem festgestellt wurde, dass es sich im Fehlerzustand befindet, blockiert ist oder wahrscheinlich blockiert wird, und der Zustand-Feststellungsabschnitt (114) in einem Fall, in dem der Zufuhrsystemfehler-Feststellungsabschnitt (102-108, 210-222) feststellt, dass sich irgendeines des Ausgangsmaterial-Zufuhrsystems (L1), des Wasser-Zufuhrsystems (L2) und des Kathodengas-Zufuhrsystems (L3) im Fehlerzustand befindet, da eine Untergrenze von einem der ersten und zweiten vorbestimmten Bereiche nicht erreicht wird, feststellt, dass eines des Ausgangsmaterial-Zufuhrsystems (L1), des Wasser-Zufuhrsystems (L2) und des Kathodengas-Zufuhrsystems (L3), bei dem festgestellt wurde, dass es sich im Fehlerzustand befindet, leckt oder wahrscheinlich lecken wird.

4. Brennstoffzellensystem nach Anspruch 2, mit außerdem einem Reformiersystem (L4), das zumindest den Reformierabschnitt (23) aufweist, wobei der Zustand-Feststellungsabschnitt (114) in einem Fall, in dem der Zufuhrsystemfehler-Feststellungsabschnitt (102-108, 210-222) feststellt, dass sich das Ausgangsmaterial-Zufuhrsystem (L1) und das Wasser-Zufuhrsystem (L2) im Fehlerzustand befinden, da eine Obergrenze von einem der ersten und zweiten vorbestimmten Bereiche überschritten wird, feststellt, dass das Reformiersystem (L4) blockiert ist oder wahrscheinlich blockiert wird, und in einem Fall, in dem der Zufuhrsystemfehler-Feststellungsabschnitt (102-108, 210-222) feststellt, dass sich das Ausgangsmaterial-Zufuhrsystem (L1) und das Wasser-Zufuhrsystem (L2) im Fehlerzustand befinden, da eine Untergrenze von einem der ersten und zweiten vorbestimmten Bereiche nicht erreicht wird, feststellt, dass das Reformiersystem (L4) leckt oder wahrscheinlich lecken wird.

5. Brennstoffzellensystem nach Anspruch 2, mit außerdem einem Verbrennungsabschnitt (26), der ein Anodenabgas der Brennstoffzelle (24) verbrennt, um ein Verbrennungsgas zu erzeugen und den Reformierabschnitt (23) durch das Verbrennungsgas zu erwärmen, und einem Abgassystem (L5), das das Verbrennungsgas abgibt, wobei der Zustand-Feststellungsabschnitt (114) in einem Fall, in dem der Zufuhrsystemfehler-Feststellungsabschnitt (102-108, 210-222) feststellt, dass sich das Ausgangsmaterial-Zufuhrsystem (L1), das Wasser-Zufuhrsystem (L2) und das Kathodengas-Zufuhrsystem (L3) alle im Fehlerzustand befinden, da eine Obergrenze von einem der ersten und zweiten vorbestimmten Bereiche überschritten wird, feststellt, dass das Abgassystem (L5) blockiert ist oder wahrscheinlich blockiert wird, und in einem Fall, in dem der Zufuhrsystemfehler-Feststellungsabschnitt (102-108, 210-222) feststellt, dass sich das Ausgangsmaterial-Zufuhrsystem (L1), das Wasser-Zufuhrsystem (L2) und das Kathodengas-Zufuhrsystem (L3) alle im Fehlerzustand befinden, da eine Untergrenze von einem der ersten und zweiten vorbestimmten Bereiche nicht erreicht wird, feststellt, dass das Abgassystem (L5) leckt oder wahrscheinlich lecken wird.

6. Brennstoffzellensystem nach einem der Ansprüche 2 bis 5, mit außerdem einem Betriebfortsetzungsabschnitt (122, 124), der in einem Fall, in dem der Zufuhrsystemfehler-Feststellungsabschnitt (102-108, 210-222) feststellt, dass sich irgendeines des Ausgangsmaterial-Zufuhrsystems (L1), des Wasser-Zufuhrsystems (L2) und des Kathodengas-Zufuhrsystems (L3) im Fehlerzustand befindet, da eine Obergrenze von einem der ersten und zweiten vorbestimmten Bereiche überschritten wird, einen Stromerzeugungsbetrieb oder einen Anfahrbetrieb des Brennstoffzellensystems fortsetzt, während von dem Alarmabschnitt (122, 118) ein Alarm ausgelöst wird, und einem Betriebstoppabschnitt (118, 120), der in einem Fall, in dem der Zufuhrsystemfehler-Feststellungsabschnitt (102-108, 210-222) feststellt, dass sich irgendeines des Ausgangsmaterial-Zufuhrsystems (L1), des Wasser-Zufuhrsystems (L2) und des Kathodengas-Zufuhrsystems (L3) im Fehlerzustand befindet, da eine Untergrenze von einem des ersten und zweiten vorbestimmten Bereiches nicht erreicht wird, einen Stoppbetrieb des Brennstoffzellensystems durchführt, während von dem Alarmabschnitt (122, 118) ein Alarm ausgelöst wird.

7. Brennstoffzellensystem nach einem der Ansprüche 1 bis 3, mit außerdem einem Wasserspeichersystem (30), das zumindest eine Speicherwasser-Zufuhrvorrichtung (32a) aufweist, die gestaltet ist, von einem Elektromotor angetrieben zu werden, und Speicherwasser umwälzt, das Abgaswärme der Brennstoffzelle (24) rückgewinnt.

## Revendications

1. Système de pile à combustible comprenant :
une pile à combustible (24) générant une puissance électrique par un combustible et un gaz oxydant ;
une partie de reformage (23) générant le combustible par un matériau de base et de l'eau ;
un système d'alimentation en matériau de base (L1) comportant un dispositif d'alimentation en matériau de base (42e) configuré de manière à être entraîné par un moteur électrique et fournissant le matériau de base ;
un système d'alimentation en eau (L2) comportant un dispositif d'alimentation en eau (41a) configuré de manière à être entraîné par un moteur électrique et fournissant l'eau ;
un système d'alimentation en gaz cathodique (L3) comportant un dispositif d'alimentation en gaz oxydant (44a) configuré de manière à être entraîné par un moteur électrique et fournissant le gaz oxydant ; et
un dispositif de commande (60) commandant chacun du dispositif d'alimentation en matériau de base (42e), du dispositif d'alimentation en eau (41a) et du dispositif d'alimentation en gaz oxydant (44a) de sorte qu'un volume d'alimentation d'un fluide fourni par chacun du dispositif d'alimentation en matériau de base (42e), du dispositif d'alimentation en eau (41a) et du dispositif d'alimentation en gaz oxydant (44a) devienne égal à une valeur de commande cible, le fluide comportant le combustible, le gaz oxydant, le matériau de base, et l'eau, où
le dispositif de commande (60) comporte :
une partie (204-208) de dérivation de caractéristiques de valeur d'indication par rapport au débit obtenant des données d'une valeur d'indication de commande donnée en instruction à chacun du dispositif d'alimentation en matériau de base (42e), du dispositif d'alimentation en eau (41a) et du dispositif d'alimentation en gaz oxydant (44a) et un débit du fluide fourni par chacun du dispositif d'alimentation en matériau de base (42e), du dispositif d'alimentation en eau (41a) et du dispositif d'alimentation en gaz oxydant (44a) ou des révolutions du moteur électrique de chacun du dispositif d'alimentation en matériau de base (42e), du dispositif d'alimentation en eau (41a) et du dispositif d'alimentation en gaz oxydant (44a) dans un temps prédéterminé (TM3) au cours d'une opération de génération de puissance réelle ou d'une opération de démarrage, et générant une carte ou une formule de calcul indiquant une corrélation entre la valeur d'indication de commande et le débit du fluide ou les révolutions du moteur électrique sur la base des données de la valeur d'indication de commande et du débit du fluide ou des révolutions du moteur électrique obtenues dans le temps prédéterminé (TM3) ;
une partie (102-108, 210-222) de détermination d'erreur de système d'alimentation comparant les caractéristiques de référence de valeur d'indication par rapport au débit servant de référence de caractéristiques entre le débit et la valeur d'indication de commande et stockées à l'avance et les caractéristiques dérivées de valeur d'indication par rapport au débit générées par la partie (204-208) de dérivation de caractéristiques de valeur d'indication par rapport au débit pour déterminer, sur la base d'un résultat de comparaison, si chacun du système d'alimentation en matériau de base (L1), du système d'alimentation en eau (L2) et du système d'alimentation en gaz cathodique (L3) comportant le dispositif d'alimentation en matériau de base (42e), le dispositif d'alimentation en eau (41a) et le dispositif d'alimentation en gaz oxydant (44a), respectivement, se trouve dans un état normal ou dans un état d'erreur ;
une partie de détermination d'état (114) déterminant un état du système de pile à combustible sur la base d'un résultat de détermination par la partie (102-108, 210-222) de détermination d'erreur de système d'alimentation ; et
une partie d'alerte (122, 118) émettant une alerte dans un cas où l'état déterminé par la partie de détermination d'état (114) indique une erreur,
où la partie (102-108, 210-222) de détermination d'erreur de système d'alimentation comporte une partie (210) de calcul de valeur d'indication de commande corrélée calculant la valeur d'indication de commande corrélée à une valeur prédéterminée (Q1) du débit ou les révolutions du moteur électrique à partir des caractéristiques dérivées de valeur d'indication par rapport au débit générées par la partie (204-208) de dérivation de caractéristiques de valeur d'indication par rapport au débit pour obtenir une valeur d'indication de commande corrélée (A, A1) pour chacun du dispositif d'alimentation en matériau de base (42e), du dispositif d'alimentation en eau (41a) et du dispositif d'alimentation en gaz oxydant (44a), et comporte une première partie de détermination (212, 218 à 222) déterminant que chacun du système d'alimentation en matériau de base (L1), du système d'alimentation en eau (L2) et du système d'alimentation en gaz cathodique (L3) comportant le dispositif d'alimentation en matériau de base (42e), le dispositif d'alimentation en eau (41a) et le dispositif d'alimentation en gaz oxydant (44a), respectivement, se trouve à l'état normal dans un cas où la valeur d'indication de commande corrélée (A, A1) pour chacun du dispositif d'alimentation en matériau de base (42e), du dispositif d'alimentation en eau (41a) et du dispositif d'alimentation en gaz oxydant (44a) calculée par la partie (210) de calcul de valeur d'indication de commande corrélée se trouve dans une première plage prédéterminée générée sur la base de la valeur prédéterminée (Q1) à partir des caractéristiques de référence de valeur d'indication par rapport au débit, et déterminant que chacun du système d'alimentation en matériau de base (L1), du système d'alimentation en eau (L2) et du système d'alimentation en gaz cathodique (L3) comportant le dispositif d'alimentation en matériau de base (42e), le dispositif d'alimentation en eau (41a) et le dispositif d'alimentation en gaz oxydant (44a), respectivement, se trouve à l'état d'erreur dans un cas où la valeur d'indication de commande corrélée (A, A1) pour chacun du dispositif d'alimentation en matériau de base (42e), du dispositif d'alimentation en eau (41a) et du dispositif d'alimentation en gaz oxydant (44a) calculée par la partie (210) de calcul de valeur d'indication de commande corrélée est hors de la première plage prédéterminée.

2. Système de pile à combustible selon la revendication 1, dans lequel la partie (102-108, 210-222) de détermination d'erreur de système d'alimentation comporte une deuxième partie de détermination (214-222) déterminant que chacun du système d'alimentation en matériau de base (L1), du système d'alimentation en eau (L2) et du système d'alimentation en gaz cathodique (L3) comportant le dispositif d'alimentation en matériau de base (42e), le dispositif d'alimentation en eau (41a) et le dispositif d'alimentation en gaz oxydant (44a), respectivement, se trouve à l'état normal dans un cas où une quantité de changement de la valeur d'indication de commande corrélée (dA, dA1) pour chacun du dispositif d'alimentation en matériau de base (42e), du dispositif d'alimentation en eau (41a) et du dispositif d'alimentation en gaz oxydant (44a) calculée par la partie (210) de calcul de valeur d'indication de commande corrélée se trouve dans une deuxième plage prédéterminée et déterminant que chacun du système d'alimentation en matériau de base (L1), du système d'alimentation en eau (L2) et du système d'alimentation en gaz cathodique (L3) comportant le dispositif d'alimentation en matériau de base (42e), le dispositif d'alimentation en eau (41a) et le dispositif d'alimentation en gaz oxydant (44a), respectivement, se trouve à l'état d'erreur dans un cas où la quantité de changement de la valeur d'indication de commande corrélée (dA, dA1) pour chacun du dispositif d'alimentation en matériau de base (42e), du dispositif d'alimentation en eau (41a) et du dispositif d'alimentation en gaz oxydant (44a) calculée par la partie (210) de calcul de valeur d'indication de commande corrélée est hors de la deuxième plage prédéterminée dans un état où la première partie de détermination (212, 218 à 222) détermine que chacun du système d'alimentation en matériau de base (L1), du système d'alimentation en eau (L2) et du système d'alimentation en gaz cathodique (L3) se trouve à l'état normal.

3. Système de pile à combustible selon la revendication 2, dans lequel, dans un cas où la partie (102-108, 210-222) de détermination d'erreur de système d'alimentation détermine que l'un quelconque du système d'alimentation en matériau de base (L1), du système d'alimentation en eau (L2) et du système d'alimentation en gaz cathodique (L3) se trouve à l'état d'erreur parce qu'une limite supérieure de l'une des première et deuxième plages prédéterminées est dépassée, la partie de détermination d'état (114) détermine que l'un du système d'alimentation en matériau de base (L1), du système d'alimentation en eau (L2) et du système d'alimentation en gaz cathodique (L3), déterminé comme étant à l'état d'erreur, est bloqué ou susceptible d'être bloqué, et dans un cas où la partie (102-108, 210-222) de détermination d'erreur de système d'alimentation détermine que l'un quelconque du système d'alimentation en matériau de base (L1), du système d'alimentation en eau (L2) et du système d'alimentation en gaz cathodique (L3) se trouve à l'état d'erreur parce qu'une limite inférieure de l'une des première et deuxième plages prédéterminées n'est pas atteinte, la partie de détermination d'état (114) détermine que l'un du système d'alimentation en matériau de base (L1), du système d'alimentation en eau (L2) et du système d'alimentation en gaz cathodique (L3), déterminé comme étant à l'état d'erreur, fuit ou est susceptible de fuir.

4. Système de pile à combustible selon la revendication 2, comprenant en outre un système de reformage (L4) comportant au moins la partie de reformage (23), où la partie de détermination d'état (114) détermine que le système de reformage (L4) est bloqué ou susceptible d'être bloqué dans un cas où la partie (102-108, 210-222) de détermination d'erreur de système d'alimentation détermine que le système d'alimentation en matériau de base (L1) et le système d'alimentation en eau (L2) se trouvent à l'état d'erreur parce qu'une limite supérieure de l'une des première et deuxième plages prédéterminées est dépassée et détermine que le système de reformage (L4) fuit ou est susceptible de fuir dans un cas où la partie (102-108, 210-222) de détermination d'erreur de système d'alimentation détermine que le système d'alimentation en matériau de base (L1) et le système d'alimentation en eau (L2) se trouvent à l'état d'erreur parce qu'une limite inférieure de l'une des première et deuxième plages prédéterminées n'est pas atteinte.

5. Système de pile à combustible selon la revendication 2, comprenant en outre une partie de combustion (26) brûlant un gaz de dégagement anodique de la pile à combustible (24) pour générer un gaz de combustion et chauffant la partie de reformage (23) par le gaz de combustion, et un système d'échappement (L5) déchargeant le gaz de combustion, où la partie de détermination d'état (114) détermine que le système d'échappement (L5) est bloqué ou susceptible d'être bloqué dans un cas où la partie (102-108, 210-222) de détermination d'erreur de système d'alimentation détermine que l'ensemble du système d'alimentation en matériau de base (L1), du système d'alimentation en eau (L2) et du système d'alimentation en gaz cathodique (L3) se trouvent à l'état d'erreur parce qu'une limite supérieure de l'une des première et deuxième plages prédéterminées est dépassée, et détermine que le système d'échappement (L5) fuit ou est susceptible de fuir dans un cas où la partie (102-108, 210-222) de détermination d'erreur de système d'alimentation détermine que l'ensemble du système d'alimentation en matériau de base (L1), du système d'alimentation en eau (L2) et du système d'alimentation en gaz cathodique (L3) se trouvent à l'état d'erreur parce qu'une limite inférieure de l'une des première et deuxième plages prédéterminées n'est pas atteinte.

6. Système de pile à combustible selon l'une quelconque des revendications 2 à 5, comprenant en outre une partie de poursuite d'opération (122, 124) poursuivant une opération de génération de puissance ou une opération de démarrage du système de pile à combustible en émettant une alerte par la partie d'alerte (122, 118) dans un cas où la partie (102-108, 210-222) de détermination d'erreur de système d'alimentation détermine que l'un quelconque du système d'alimentation en matériau de base (L1), du système d'alimentation en eau (L2) et du système d'alimentation en gaz cathodique (L3) se trouve à l'état d'erreur parce qu'une limite supérieure de l'une des première et deuxième plages prédéterminées est dépassée, et une partie d'arrêt d'opération (118, 120) exécutant une opération d'arrêt du système de pile à combustible tout en émettant une alerte par la partie d'alerte (122, 118) dans un cas où la partie (102-108, 210-222) de détermination d'erreur de système d'alimentation détermine que l'un quelconque du système d'alimentation en matériau de base (L1), du système d'alimentation en eau (L2) et du système d'alimentation en gaz cathodique (L3) se trouve à l'état d'erreur parce qu'une limite inférieure de l'une des première et deuxième plages prédéterminées n'est pas atteinte.

7. Système de pile à combustible selon l'une quelconque des revendications 1 à 3, comprenant en outre un système de stockage d'eau (30) comportant au moins un dispositif d'alimentation en eau de stockage (32a) configuré de manière à être entraîné par un moteur électrique et faisant circuler une eau de stockage qui récupère une chaleur d'échappement de la pile à combustible (24) .
